# EUROPEAN PATENT APPLICATION

(11) **EP 4 694 427 A1**
(43) Date of publication of application: **11.02.2026**
(21) Application number: 24784439.2
(22) Date of filing: 07.04.2024
(51) Int. Cl.: H04W 64/00, H04W 72/0446

(54) **POSITIONING REFERENCE SIGNAL SENDING METHOD, DEVICE AND APPARATUS, AND STORAGE MEDIUM**

(30) Priority: 07.04.2023 CN 202310371219
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); REN, Xiaotao, Beijing 100085 (CN)
(74) Representative: Ipsilon
(86) International application number: PCT/CN2024/086393
(87) International publication number: WO 2024/208358

(57) **Abstract**

Provided in the embodiments of the present disclosure are a positioning reference signal sending method, device and apparatus, and a storage medium. The method comprises: a target terminal or a PRU receiving positioning reference signal configuration information, wherein the positioning reference signal configuration information is used for configuring the target terminal, and is used by the PRU to send positioning reference signals in the same dual-differential effective window (DDEW); and sending positioning reference signals according to the positioning reference signal configuration information.

## Description

### CROSS-REFERENCES TO RELATED APPLICATIONS

The present application claims priority to Chinese Patent Application No. 202310371219.1 filed on April 7, 2023, entitled "Positioning Reference Signal Sending Method, Device and Apparatus, and Storage Medium", which is hereby incorporated by reference in its entirety.

### FIELD

The present application relates to the field of radio communications, and in particular, to methods and apparatuses for sending a positioning reference signal, devices, and storage media.

### BACKGROUND

The current 3rd Generation Partnership Project (3GPP) is discussing an uplink (UL) double differential positioning scheme, but no conclusion has been reached. Based on the current 3GPP definition, there may be a certain time interval between a time when a target terminal (e.g., user equipment, UE) sends an uplink sounding reference signal (UL SRS) and a time when a positioning reference unit (PRU) sends an uplink sounding reference signal (UL SRS). Different base stations/cells/transmission and reception points (TRPs) may have different measurement times (i.e., there may be a certain time interval) for same UE (target UE or PRU), and measurement times for different target UEs or different PRUs may also be different (i.e., there may be a certain time interval). In this case, cumulative errors of crystal oscillator frequency offset between a terminal and a base station at different time intervals will result in deviations of measurement quantities in double differential carrier phase and double differential time of arrival (TOA), leading to a decrease in positioning accuracy of the double differential positioning scheme.

### BRIEF SUMMARY

In response to the problems in the related art, embodiments of the present application provide methods and apparatuses for sending a positioning reference signal, devices, and storage media.

Embodiments of the present application provide a method for sending a positioning reference signal, performed by a target terminal or a positioning reference unit (PRU), including:
receiving positioning reference signal configuration information, where the positioning reference signal configuration information is used to configure the target terminal and the PRU to send the positioning reference signal in a same double differential effective window (DDEW); and
sending the positioning reference signal based on the positioning reference signal configuration information.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the method further includes:
before receiving the positioning reference signal configuration information, sending, by the PRU, a positioning capability message to a location management function or the target terminal, where the positioning capability message carries absolute location information of the PRU; or
before receiving the positioning reference signal configuration information, sending, by the PRU, a PRU location information message to a location management function or the target terminal, where the PRU location information message carries absolute location information of the PRU.

In some embodiments, the method further includes:
receiving, by the target terminal, positioning measurement quantity information, where the positioning measurement quantity information includes a positioning measurement quantity and DDEW information associated with the positioning measurement quantity; and
determining, by the target terminal, validity of the positioning measurement quantity based on the positioning measurement quantity information.

Embodiments of the present application further provide a method for sending a positioning reference signal, performed by a first location management function, including:
sending a first positioning information request message to a serving network device of a target terminal and/or a serving network device of a positioning reference unit (PRU), where the first positioning information request message carries double differential effective window (DDEW) configuration information.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, in case that the DDEW configuration information is the configuration information of the second-type DDEW, after sending the configuration information of the second-type DDEW to a first network device, the method further includes:
receiving positioning reference signal configuration information sent from the first network device; and
sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In some embodiments, before sending the first positioning information request message to the serving network device of the target terminal or the serving network device of the PRU, the method further includes:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In some embodiments, the method further includes:
sending first indication information to a receiving node of the positioning reference signal, where the first indication information is used to indicate different receiving nodes to measure the positioning reference signal sent from the target terminal and the PRU respectively in the same DDEW.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

In some embodiments, receiving the positioning measurement quantity information includes:
receiving the positioning measurement quantity information sent from the serving network device of the PRU, where the positioning measurement quantity information also carries absolute location information of the PRU.

In some embodiments, the method further includes:
receiving a positioning capability message or a PRU location information message sent from the PRU, where the positioning capability message or the PRU location information message carries absolute location information of the PRU.

In some embodiments, before sending the first positioning information request message to the serving network device of the target terminal and/or the serving network device of the PRU, the method further includes:
obtaining support information for real-time double differential and/or DDEW from the serving network device of the target terminal, and/or obtaining support information for real-time double differential and/or DDEW from the serving network device of the PRU.

Embodiments of the present application further provide a method for sending a positioning reference signal, performed by a first network device, including:
determining double differential effective window (DDEW) configuration information; and
generating first positioning reference signal configuration information based on the DDEW configuration information, where the first positioning reference signal configuration information is used to configure a target terminal and a positioning reference unit (PRU) to send the positioning reference signal in a same DDEW.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, determining the DDEW configuration information includes:
receiving a positioning information request message sent from a location management function, where the positioning information request message carries the DDEW configuration information.

In some embodiments, in case that the DDEW configuration information is the configuration information of the second-type DDEW, the method further includes:
sending the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

In some embodiments, the method further includes:
sending support information of the first network device for real-time double differential and/or DDEW to a location management function.

Embodiments of the present application further provide a method for sending a positioning reference signal, performed by a head terminal, including:
configuring, based on double differential effective window (DDEW) configuration information, a target terminal and a positioning reference unit (PRU) to send the positioning reference signal in a same DDEW.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the method further includes:
sending second indication information to a receiving node of the positioning reference signal, where the second indication information is used to indicate different receiving nodes to measure the positioning reference signal sent from the target terminal and the PRU respectively in the same DDEW.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

Embodiments of the present application further provide a target terminal or positioning reference unit (PRU), including a memory, a transceiver, and a processor, where
the memory is used for storing a computer program; the transceiver is used for transmitting and receiving data under control of the processor; and the processor is used for reading the computer program in the memory and performing the following operations:
receiving positioning reference signal configuration information, where the positioning reference signal configuration information is used to configure the target terminal and the PRU to send the positioning reference signal in a same double differential effective window (DDEW); and
sending the positioning reference signal based on the positioning reference signal configuration information.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the operations further include:
before receiving the positioning reference signal configuration information, sending, by the PRU, a positioning capability message to a location management function or the target terminal, where the positioning capability message carries absolute location information of the PRU; or
before receiving the positioning reference signal configuration information, sending, by the PRU, a PRU location information message to a location management function or the target terminal, where the PRU location information message carries absolute location information of the PRU.

In some embodiments, the operations further include:
receiving, by the target terminal, positioning measurement quantity information, where the positioning measurement quantity information includes a positioning measurement quantity and DDEW information associated with the positioning measurement quantity; and
determining, by the target terminal, validity of the positioning measurement quantity based on the positioning measurement quantity information.

Embodiments of the present application further provide a first location management function, including a memory, a transceiver, and a processor, where
the memory is used for storing a computer program; the transceiver is used for transmitting and receiving data under control of the processor; and the processor is used for reading the computer program in the memory and performing the following operations:
sending a first positioning information request message to a serving network device of a target terminal and/or a serving network device of a positioning reference unit (PRU), where the first positioning information request message carries double differential effective window (DDEW) configuration information.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, in case that the DDEW configuration information is the configuration information of the second-type DDEW, after sending the configuration information of the second-type DDEW to a first network device, the operations further include:
receiving positioning reference signal configuration information sent from the first network device; and
sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In some embodiments, before sending the first positioning information request message to the serving network device of the target terminal or the serving network device of the PRU, the operations further include:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In some embodiments, the operations further include:
sending first indication information to a receiving node of the positioning reference signal, where the first indication information is used to indicate different receiving nodes to measure the positioning reference signal sent from the target terminal and the PRU respectively in the same DDEW.

In some embodiments, the operations further include:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

In some embodiments, receiving the positioning measurement quantity information includes:
receiving the positioning measurement quantity information sent from the serving network device of the PRU, where the positioning measurement quantity information also carries absolute location information of the PRU.

In some embodiments, the operations further include:
receiving a positioning capability message or a PRU location information message sent from the PRU, where the positioning capability message or the PRU location information message carries absolute location information of the PRU.

In some embodiments, before sending the first positioning information request message to the serving network device of the target terminal and/or the serving network device of the PRU, the operations further include:
obtaining support information for real-time double differential and/or DDEW from the serving network device of the target terminal, and/or obtaining support information for real-time double differential and/or DDEW from the serving network device of the PRU.

Embodiments of the present application further provide a first network device, including a memory, a transceiver, and a processor, where
the memory is used for storing a computer program; the transceiver is used for transmitting and receiving data under control of the processor; and the processor is used for reading the computer program in the memory and performing the following operations:
determining double differential effective window (DDEW) configuration information; and
generating first positioning reference signal configuration information based on the DDEW configuration information, where the first positioning reference signal configuration information is used to configure a target terminal and a positioning reference unit (PRU) to send the positioning reference signal in a same DDEW.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, determining the DDEW configuration information includes:
receiving a positioning information request message sent from a location management function, where the positioning information request message carries the DDEW configuration information.

In some embodiments, in case that the DDEW configuration information is the configuration information of the second-type DDEW, the operations further include:
sending the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

In some embodiments, the operations further include:
sending support information of the first network device for real-time double differential and/or DDEW to a location management function.

Embodiments of the present application further provide a head terminal, including a memory, a transceiver, and a processor, where
the memory is used for storing a computer program; the transceiver is used for transmitting and receiving data under control of the processor; and the processor is used for reading the computer program in the memory and performing the following operations:
configuring, based on double differential effective window (DDEW) configuration information, a target terminal and a positioning reference unit (PRU) to send the positioning reference signal in a same DDEW.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the operations further include:
sending second indication information to a receiving node of the positioning reference signal, where the second indication information is used to indicate different receiving nodes to measure the positioning reference signal sent from the target terminal and the PRU respectively in the same DDEW.

In some embodiments, the operations further include:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

Embodiments of the present application further provide an apparatus for sending a positioning reference signal, including:
a first receiving unit, used for receiving positioning reference signal configuration information, where the positioning reference signal configuration information is used to configure a target terminal and a positioning reference unit (PRU) to send the positioning reference signal in a same double differential effective window (DDEW); and
a first sending unit, used for sending the positioning reference signal based on the positioning reference signal configuration information.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the first sending unit is further used for:
before receiving the positioning reference signal configuration information, sending, by the PRU, a positioning capability message to a location management function or the target terminal, where the positioning capability message carries absolute location information of the PRU; or
before receiving the positioning reference signal configuration information, sending, by the PRU, a PRU location information message to a location management function or the target terminal, where the PRU location information message carries absolute location information of the PRU.

In some embodiments, the apparatus further includes:
a second receiving unit, used for the target terminal to receive positioning measurement quantity information, where the positioning measurement quantity information includes a positioning measurement quantity and DDEW information associated with the positioning measurement quantity; and
a first determining unit, used for the target terminal to determine validity of the positioning measurement quantity based on the positioning measurement quantity information.

Embodiments of the present application further provide an apparatus for sending a positioning reference signal, including:
a second sending unit, used for sending a first positioning information request message to a serving network device of a target terminal and/or a serving network device of a positioning reference unit (PRU), where the first positioning information request message carries double differential effective window (DDEW) configuration information.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, the apparatus further includes:
a third receiving unit, used for receiving, in case that the DDEW configuration information is the configuration information of the second-type DDEW, positioning reference signal configuration information sent from the first network device, after sending the configuration information of the second-type DDEW to a first network device; and
a third sending unit, used for sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In some embodiments, the apparatus further includes:
a fourth receiving unit, used for receiving, before sending the first positioning information request message to the serving network device of the target terminal or the serving network device of the PRU, the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In some embodiments, the second sending unit is further used for:
sending first indication information to a receiving node of the positioning reference signal, where the first indication information is used to indicate different receiving nodes to measure the positioning reference signal sent from the target terminal and the PRU respectively in the same DDEW.

In some embodiments, the apparatus further includes:
a fifth receiving unit, used for receiving positioning measurement quantity information, where the positioning measurement quantity information includes a positioning measurement quantity and DDEW information associated with the positioning measurement quantity; and
a second determining unit, used for determining validity of the positioning measurement quantity based on the positioning measurement quantity information.

In some embodiments, receiving the positioning measurement quantity information includes:
receiving the positioning measurement quantity information sent from the serving network device of the PRU, where the positioning measurement quantity information also carries absolute location information of the PRU.

In some embodiments, the apparatus further includes:
a sixth receiving unit, used for receiving a positioning capability message or a PRU location information message sent from the PRU, where the positioning capability message or the PRU location information message carries absolute location information of the PRU.

In some embodiments, the apparatus further includes:
an obtaining unit, used for obtaining support information for real-time double differential and/or DDEW from the serving network device of the target terminal, and/or obtaining support information for real-time double differential and/or DDEW from the serving network device of the PRU.

Embodiments of the present application further provide an apparatus for sending a positioning reference signal, including:
a determining unit, used for determining double differential effective window (DDEW) configuration information; and
a generating unit, used for generating first positioning reference signal configuration information based on the DDEW configuration information, where the first positioning reference signal configuration information is used to configure a target terminal and a positioning reference unit (PRU) to send the positioning reference signal in a same DDEW.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, determining the DDEW configuration information includes:
receiving a positioning information request message sent from a location management function, where the positioning information request message carries the DDEW configuration information.

In some embodiments, the apparatus further includes:
a fourth sending unit, used for sending, in case that the DDEW configuration information is the configuration information of the second-type DDEW, the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

In some embodiments, the apparatus further includes:
a fifth sending unit, used for sending support information of the first network device for real-time double differential and/or DDEW to a location management function.

Embodiments of the present application further provide an apparatus for sending a positioning reference signal, including:
a configuring unit, used for configuring, based on double differential effective window (DDEW) configuration information, a target terminal and a positioning reference unit (PRU) to send the positioning reference signal in a same DDEW.

In some embodiments, the DDEW is a first-type DDEW or a second-type DDEW, where the first-type DDEW is defined based on an absolute time-domain location and the second-type DDEW is defined based on a relative time-domain location.

In some embodiments, a configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the apparatus further includes:
a sixth sending unit, used for sending second indication information to a receiving node of the positioning reference signal, where the second indication information is used to indicate different receiving nodes to measure the positioning reference signal sent from the target terminal and the PRU respectively in the same DDEW.

In some embodiments, the apparatus further includes:
a seventh receiving unit, used for receiving positioning measurement quantity information, where the positioning measurement quantity information includes a positioning measurement quantity and DDEW information associated with the positioning measurement quantity; and
a third determining unit, used for determining validity of the positioning measurement quantity based on the positioning measurement quantity information.

Embodiments of the present application further provide a computer-readable storage medium storing a computer program, where the computer program is used to cause a computer to perform the method for sending a positioning reference signal as described above.

Embodiments of the present application further provide a communication device storing a computer program, where the computer program is used to cause the communication device to perform the method for sending a positioning reference signal as described above.

Embodiments of the present application further provide a processor-readable storage medium storing a computer program, where the computer program is used to cause a processor to perform the method for sending a positioning reference signal as described above.

Embodiments of the present application further provide a chip product storing a computer program, where the computer program is used to cause the chip product to perform the method for sending a positioning reference signal as described above.

In the methods and apparatuses for sending a positioning reference signal, devices, and storage media provided in embodiments of the present application, the target terminal and PRU may transmit the positioning reference signal in the same DDEW based on the positioning reference signal configuration information, which may reduce the time interval between the target terminal and PRU sending the positioning reference signal, and improve the accuracy of real-time double differential positioning.

### BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.
FIG. 1 is a first schematic flowchart of a method for sending a positioning reference signal according to an embodiment of the present application;
FIG. 2 is a schematic diagram of an aperiodic DDEW according to an embodiment of the present application;
FIG. 3 is a second schematic flowchart of a method for sending a positioning reference signal according to an embodiment of the present application;
FIG. 4 is a third schematic flowchart of a method for sending a positioning reference signal according to an embodiment of the present application;
FIG. 5 is a fourth schematic flowchart of a method for sending a positioning reference signal according to an embodiment of the present application;
FIG. 6 is a first schematic flowchart of an embodiment of a method for sending a positioning reference signal according to an embodiment of the present application;
FIG. 7 is a second schematic flowchart of an embodiment of a method for sending a positioning reference signal according to an embodiment of the present application;
FIG. 8 is a third schematic flowchart of an embodiment of a method for sending a positioning reference signal according to an embodiment of the present application;
FIG. 9 is a fourth schematic flowchart of an embodiment of a method for sending a positioning reference signal according to an embodiment of the present application;
FIG. 10 is a fifth schematic flowchart of an embodiment of a method for sending a positioning reference signal according to an embodiment of the present application;
FIG. 11 is a schematic structural diagram of a target terminal or PRU according to an embodiment of the present application;
FIG. 12 is a schematic structural diagram of a first location management function according to an embodiment of the present application;
FIG. 13 is a schematic structural diagram of a first network device according to an embodiment of the present application;
FIG. 14 is a schematic structural diagram of a head terminal according to an embodiment of the present application;
FIG. 15 is a first schematic structural diagram of an apparatus for sending a positioning reference signal according to an embodiment of the present application;
FIG. 16 is a second schematic structural diagram of an apparatus for sending a positioning reference signal according to an embodiment of the present application;
FIG. 17 is a third schematic structural diagram of an apparatus for sending a positioning reference signal according to an embodiment of the present application; and
FIG. 18 is a fourth schematic structural diagram of an apparatus for sending a positioning reference signal according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

A clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

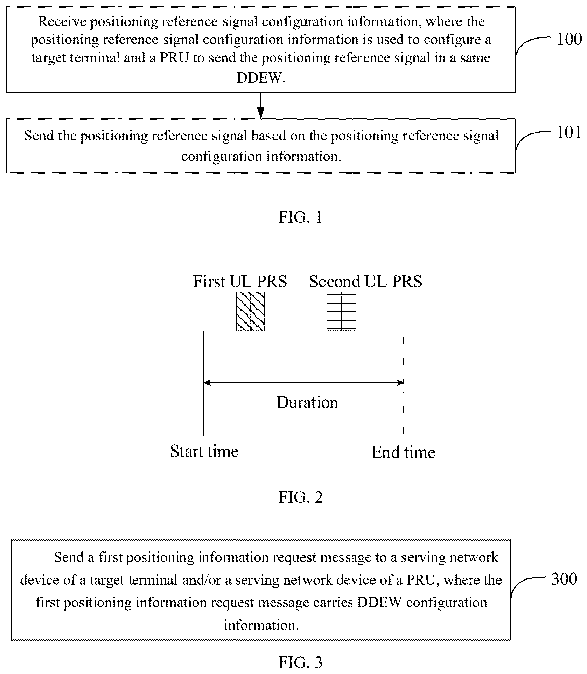

FIG. 1 is a first schematic flowchart of a method for sending a positioning reference signal according to an embodiment of the present application. The method may be performed by a target terminal or a positioning reference unit (PRU). As shown in FIG. 1, the method includes the following steps:
step 100: receiving positioning reference signal configuration information, where the positioning reference signal configuration information is used to configure a target terminal and a positioning reference unit (PRU) to send the positioning reference signal in a same double differential effective window (DDEW); and
step 101: sending the positioning reference signal based on the positioning reference signal configuration information.

In an embodiment, the target terminal refers to a terminal that needs to be positioned. The real-time double differential positioning scheme provided in the present application may be applied to an uplink/sidelink (SL) carrier phase positioning method, an uplink time difference of arrival (UL-TDOA) positioning method, or an SL-TDOA positioning method, etc.

The positioning reference signal described in the present application may be an UL positioning reference signal, for example, a sounding reference signal (SRS) (also known as a UL SRS or a UL positioning reference signal (PRS), etc.), or may be an SL positioning reference signal, for example, an SL PRS.

In an embodiment of the present application, by configuring the target terminal and PRU to send the positioning reference signal in the same double differential effective window (DDEW), the time interval for the target terminal and PRU sending the positioning reference signal may be reduced, improving the accuracy of double differential positioning.

In some embodiments, the positioning reference signal configuration information may be configured and sent to the target terminal or PRU from the serving network device of the target terminal or PRU (e.g.: a base station). Or the positioning reference signal configuration information may be configured and sent to the location management function from the serving network device of the target terminal or PRU (e.g.: a base station), and the location management function sends it to the target terminal or PRU. Or the positioning reference signal configuration information may be configured and sent to the target terminal or PRU from the head terminal.

In some embodiments, a head terminal (representing a header UE or head UE) is a type of terminal that may allocate resources to other terminals. For example, a group of terminals includes multiple terminals, and the head terminal may be responsible for controlling multiple terminals in the group, such as controlling resource coordination when multiple terminals transmit sidelink data, and controlling the increase or decrease in a quantity of multiple terminals.

The location management function may be a location management function (LMF) in 5G systems, or other functions that implement similar functions to the LMF in traditional or future communication systems.

In some embodiments, the above DDEW may be the first-type DDEW or the second-type DDEW, where the first-type DDEW is defined based on an absolute time-domain location and the second-type DDEW is defined based on a relative time-domain location.

In an embodiment, the DDEW defined in the present application may include two types: the first-type DDEW and the second-type DDEW. The first-type DDEW defines the absolute time-domain location of DDEW, while the second-type DDEW defines the relative time-domain location of DDEW (e.g.: a window length and duration, etc.).

In some embodiments, the configuration parameter of the first-type DDEW may include one or more of the following:
(1) a start time-domain unit, which is the start time domain location of DDEW, where the time-domain unit may be a radio frame, subframe, slot, or orthogonal frequency division multiplex (OFDM) symbol, etc.;
(2) a window length or duration, where the window length refers to a time length of DDEW, i.e., the duration of DDEW;
(3) an end time-domain unit, which is the end time domain location of DDEW;
(4) granularity of a time-domain unit, which is granularity used to define the time parameter of DDEW, where granularity may be a subframe, slot, or OFDM symbol; or
(5) a repetition period, which is the repetition period of DDEW, where a periodic and semi-persistent UL SRS/SL PRS has a repetition period, and a corresponding DDEW has a repetition period; an aperiodic UL SRS/SL PRS has no repetition period, and a corresponding DDEW is an aperiodic DDEW.

In some embodiments, the first-type DDEW may include the following absolute time parameters:
(1) a start time t_begin, including: a start radio frame number, a start slot offset in the radio frame, and a start OFDM symbol offset in the start slot;
(2) a window length/duration L, measured in granularity, with a range of {1, 2,..., L_Max}, where L_Max is a positive integer greater than or equal to 1;
(3) an end time t_end, including: an end radio frame number, an end slot offset in the radio frame, and an end OFDM symbol offset in the end slot;
(4) granularity t_granularity, which value may be a subframe, slot, or OFDM symbol;
(5) a repetition period T_repetition, measured in granularity, with a range of {1, 2,..., T_repetition_Max}, where T_repetition_Max is a positive integer greater than or equal to 1.

FIG. 2 is a schematic diagram of an aperiodic DDEW according to an embodiment of the present application. As shown in FIG. 2, a time period between the start time and the end time is a DDEW. The first UL PRS and the second UL PRS in the figure are UL PRSs sent from the target terminal and PRU, respectively. The time when the target terminal and PRU send the UL PRS is in the same DDEW.

For the coverage scenarios of UL and SL positioning, the serving network device of the target terminal and PRU may schedule the sending time of the corresponding UL SRS to be in the same DDEW based on the first-type DDEW configuration parameter. For the out-of-coverage scenarios of SL positioning, the head terminal may schedule the sending time of the corresponding SL PRS to be in the same DDEW based on the first-type DDEW configuration parameter.

In some embodiments, the configuration parameter of the second-type DDEW may include a window length or duration. For example, for the second-type DDEW, an effective relative time length at which the DDEW is located may be given (such as the window length/duration L_relative of the second-type DDEW, measured in granularity, with a range of {1, 2,..., L_relative_Max}, where L_relative_Max is a positive integer greater than or equal to 1).

For the coverage scenarios of UL and SL positioning, the serving network device of the target terminal and PRU may schedule the time interval of the sending times of corresponding UL SRSs to be less than or equal to the window length or duration of the second-type DDEW based on the second-type DDEW configuration parameter. For the out-of-coverage scenarios of SL positioning, the head terminal may schedule the time interval of the sending times of corresponding SL PRSs to be less than or equal to the window length or duration of the second-type DDEW based on the second-type DDEW configuration parameter.

In some embodiments, for UL positioning, in case that the UL positioning reference signal in DDEW has a higher priority than other uplink channels/signals (e.g.: a physical uplink shared channel (PUSCH), or a physical uplink control channel (PUCCH)), and there is a resource conflict between the UL positioning reference signal and other uplink channels/signals (PUSCH/PUCCH), the target terminal and PRU prioritize sending the UL positioning reference signal in the DDEW. The UL positioning reference signal may include existing NR UL sounding reference signal for positioning (SRS-Pos), UL SRS multiple-input multiple-output (SRS-MIMO), or other UL positioning reference signals. For SLs, in case that the positioning reference signal in DDEW has a higher priority than other SL channels/signals (e.g.: a physical sidelink shared channel (PSSCH) or a physical sidelink control channel (PSCCH)), and there is a resource conflict between the SL positioning reference signal and other SL channels/signals (PSSCH/PSCCH), the target terminal and PRU prioritize sending the SL positioning reference signal in the DDEW. The positioning reference signal may include three types: periodic, semi-persistent, and aperiodic.

In the method for sending a positioning reference signal provided in embodiments of the present application, the target terminal and PRU may transmit the positioning reference signal in the same DDEW based on the positioning reference signal configuration information, which may reduce the time interval between the target terminal and PRU sending the positioning reference signal, and improve the accuracy of real-time double differential positioning.

In some embodiments, the method further includes:
before receiving the positioning reference signal configuration information, the PRU sends a positioning capability message to a location management function or the target terminal, where the positioning capability message carries absolute location information of the PRU; or
before receiving the positioning reference signal configuration information, the PRU sends a PRU location information message to a location management function or the target terminal, where the PRU location information message carries absolute location information of the PRU.

In an embodiment, when performing a positioning calculation, the absolute location information of PRU is required, and for PRU, its absolute location information may be reported in multiple ways.

For example, the PRU may report its absolute location information to its serving base station, and the serving base station may jointly report to the LMF/target terminal along with the UL/SL positioning measurement quantities, or the PRU may jointly report to the LMF/target terminal with the positioning capability message, or the PRU may directly report to the LMF/target terminal in a specific message (PRU location information message).

In some embodiments, the method further includes:
receiving, by the target terminal, positioning measurement quantity information, where the positioning measurement quantity information includes a positioning measurement quantity and DDEW information associated with the positioning measurement quantity; and
determining, by the target terminal, validity of the positioning measurement quantity based on the positioning measurement quantity information.

In an embodiment, in case that the target terminal performs a positioning calculation, after receiving the positioning measurement quantity information measured by each receiving node of the positioning reference signal, the target terminal may determine the validity of the positioning measurement quantity. Only the valid positioning measurement quantity is used for positioning calculation to calculate the position of the target terminal.

The DDEW information associated with the positioning measurement quantity may be associated information of a DDEW where a measurement time of the positioning measurement quantity is located, such as DDEW configuration information or time parameter information.

In an embodiment, each receiving node of the positioning reference signal receives UL SRS/SL PRS sent from the target terminal and PRU respectively in the same DDEW instance, and reports the positioning measurement quantity and associated information of the same DDEW instance where the measurement quantity is located (at least including a timestamp with OFDM symbol as granularity, for example: a start radio frame number, a start slot offset in the radio frame, and a start OFDM symbol offset in the start slot, etc.). Afterwards, the LMF/target terminal determines whether the times corresponding to the positioning measurement quantities reported by each receiving node for the target terminal and PRU are in the same DDEW instance. If so, the positioning measurement quantity is valid; otherwise, the positioning measurement quantity is invalid.

The positioning measurement quantity may include a carrier phase measurement quantity phase of arrival (POA) and UL/SL relative time of arrival (UL/SL RTOA).

For ULs, the receiving node of the positioning reference signal includes a base station/cell/TRP. For SLs, the receiving node of the positioning reference signal includes a road side unit (RSU)/anchor UE.

FIG. 3 is a second schematic flowchart of a method for sending a positioning reference signal according to an embodiment of the present application. This method may be performed by the first location management function. As shown in FIG. 3, the method includes the following step:
step 300: sending a first positioning information request message to a serving network device of a target terminal and/or a serving network device of a positioning reference unit (PRU), where the first positioning information request message carries double differential effective window (DDEW) configuration information.

The location management function may be a location management function (LMF) in 5G systems, or other functions that implement similar functions to the LMF in traditional or future communication systems.

The first location management function may be the location management function connected to the target terminal, or the location management function connected to the PRU, or the location management function connected to the target terminal and PRU (the target terminal and PRU are connected to the same location management function).

In case that the corresponding serving network device is connected to the first location management function, the first location management function may send a first positioning information request message to the serving network device of the target terminal and/or the serving network device of the PRU. The first positioning information request message carries DDEW configuration information. The serving network device of the target terminal and/or the serving network device of the PRU may generate positioning reference signal configuration information based on the DDEW configuration information, and configure the target terminal and PRU to send the positioning reference signal in a same DDEW.

In some embodiments, the DDEW configuration information may be the configuration information of the first-type DDEW or the configuration information of the second-type DDEW, where the first-type DDEW is defined based on an absolute time-domain location and the second-type DDEW is defined based on a relative time-domain location.

In an embodiment, the DDEW defined in the present application may include two types: the first-type DDEW and the second-type DDEW. The first-type DDEW defines the absolute time-domain location of DDEW, while the second-type DDEW defines the relative time-domain location of DDEW (e.g.: a window length and duration, etc.).

In some embodiments, the configuration information of the first-type DDEW may include one or more of following parameters:
(1) a start time-domain unit, which is the start time domain location of DDEW, where the time-domain unit may be a radio frame, subframe, slot, or orthogonal frequency division multiplex (OFDM) symbol, etc.;
(2) a window length or duration, where the window length refers to a time length of DDEW, i.e., the duration of DDEW;
(3) an end time-domain unit, which is the end time domain location of DDEW;
(4) granularity of a time-domain unit, which is granularity used to define the time parameter of DDEW, where granularity may be a subframe, slot, or OFDM symbol; or
(5) a repetition period, which is the repetition period of DDEW.

In some embodiments, the configuration information of the second-type DDEW may include a window length or duration.

In the method for sending a positioning reference signal provided in embodiments of the present application, the location management function may carry DDEW configuration information in the positioning information request message. The serving network device of the target terminal and/or the serving network device of the PRU may generate positioning reference signal configuration information based on the DDEW configuration information, and configure the target terminal and PRU to send the positioning reference signal in a same DDEW, which may reduce the time interval between the target terminal and PRU sending the positioning reference signal, and improve the accuracy of real-time double differential positioning.

In some embodiments, in case that the DDEW configuration information is the configuration information of the second-type DDEW, after sending the configuration information of the second-type DDEW to the first network device, the method further includes:
receiving positioning reference signal configuration information sent from the first network device; and
sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In an embodiment, the DDEW configuration information is the configuration information of the first-type DDEW, and the serving network device of the target terminal or serving network device of the PRU may directly generate positioning reference signal configuration information based on the configuration information of the first-type DDEW.

For example, the location management function may respectively negotiate with the serving base stations (cells/TRPs) where the target terminal and PRU are located, and suggest that the serving base stations where the target terminal and PRU are located schedule the target terminal and PRU to send the positioning reference signal in the same first-type DDEW instance based on the first-type DDEW parameter recommended by the location management function. In some embodiments, the location management function may also provide specific time-domain location information in the recommended first-type DDEW window to avoid conflicts in sending times of positioning reference signals allocated by the serving base stations of the target terminal and the PRU.

In some embodiments, the DDEW configuration information is the configuration information of the second-type DDEW. In case that the serving network device of the target terminal and the PRU is the same, the serving network device may schedule, based on the DDEW configuration information, the time interval for the target terminal and PRU sending the positioning reference signal to be less than or equal to the window length of the second-type DDEW.

In some embodiments, the DDEW configuration information is the configuration information of the second-type DDEW. In case that the serving network device of the target terminal and the serving network device of the PRU are different, the serving network device of the target terminal and the serving network device of the PRU may coordinate with each other, or coordinate through the location management function to configure the time interval for the target terminal and PRU sending the positioning reference signal to be less than or equal to the window length of the second-type DDEW.

For example, after the serving network device of the target terminal generates the positioning reference signal configuration information, the positioning reference signal configuration information (including the sending time of the positioning reference signal) may be sent to the location management function, and the location management function may send a positioning information request message to the serving network device of the PRU. The positioning information request message carries the positioning reference signal configuration information of the target terminal and the configuration information of the second-type DDEW. The serving network device of the PRU may generate the positioning reference signal configuration information of the PRU based on the DDEW configuration information when it knows the absolute time when the target terminal sends the positioning reference signal.

In some embodiments, before sending the first positioning information request message to the serving network device of the target terminal or the serving network device of the PRU, the method further includes:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In an embodiment, in case that the serving network device of the target terminal and the serving network device of the PRU are connected to different location management functions, coordination between the location management functions may be used to configure the target terminal and PRU to send the positioning reference signal in a same DDEW.

For example, the serving network device of the target terminal is connected to the first location management function, and the serving network device of the PRU is connected to the second location management function. In some embodiments, the DDEW configuration information is the configuration information of the first-type DDEW. The first location management function connected to the target terminal may negotiate with the second location management function connected to the PRU. It is recommended that the serving network devices where the target terminal and PRU are located schedule the target terminal and PRU to send the positioning reference signal in the same first-type DDEW instance based on the recommended first-type DDEW parameter after negotiation between the two location management functions. In some embodiments, the two location management functions may also provide specific time-domain location information in the recommended first-type DDEW window, to avoid conflicts in sending times of positioning reference signals allocated by the serving network devices of the target terminal and the PRU.

For example, the serving network device of the target terminal is connected to the first location management function, and the serving network device of the PRU is connected to the second location management function. In some embodiments, the DDEW configuration information is the configuration information of the second-type DDEW. The second location management function may send the positioning reference signal configuration information of the PRU and the configuration information of the second-type DDEW to the first location management function after obtaining the positioning reference signal configuration information configured for the PRU by the serving network device of the PRU. The first location management function may send the positioning reference signal configuration information of the PRU and the configuration information of the second-type DDEW to the serving network device of the target terminal, configuring a time interval of the target terminal and PRU sending the positioning reference signal to be less than or equal to the window length of the second-type DDEW.

In some embodiments, the method further includes:
sending first indication information to a receiving node of the positioning reference signal, where the first indication information is used to indicate different receiving nodes to measure the positioning reference signal sent from the target terminal and the PRU respectively in the same DDEW.

In an embodiment, the location management function may send the first indication information to the receiving node of the positioning reference signal, to indicate different receiving nodes to measure the positioning reference signals sent from the target terminal and PRU respectively in the same DDEW, further ensuring the accuracy of the real-time double differential positioning method.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

In an embodiment, in case that the location management function performs a positioning calculation, after receiving the positioning measurement quantity information measured by each receiving node of the positioning reference signal, the location management function may determine the validity of the positioning measurement quantity. Only the valid positioning measurement quantity is used for positioning calculation to calculate the position of the target terminal.

The DDEW information associated with the positioning measurement quantity may be associated information of a DDEW where a measurement time of the positioning measurement quantity is located, such as DDEW configuration information or time parameter information.

In an embodiment, each receiving node of the positioning reference signal receives UL SRS/SL PRS sent from the target terminal and PRU respectively in the same DDEW instance, and reports the positioning measurement quantity and associated information of the same DDEW instance where the measurement quantity is located (at least including a timestamp with OFDM symbol as granularity, for example: a start radio frame number, a start slot offset in the radio frame, and a start OFDM symbol offset in the start slot, etc.). Afterwards, the location management function determines whether the times corresponding to the positioning measurement quantities reported by each receiving node for the target terminal and PRU are in the same DDEW instance. If so, the positioning measurement quantity is valid; otherwise, the positioning measurement quantity is invalid.

In some embodiments, receiving positioning measurement quantity information includes:
receiving the positioning measurement quantity information sent from the serving network device of the PRU, where the positioning measurement quantity information also carries absolute location information of the PRU.

In an embodiment, when performing a positioning calculation, the absolute location information of PRU is required, and for PRU, its absolute location information may be reported in multiple ways. One of the reporting ways is: PRU reports its absolute location information to its serving network device, and the serving network device reports the absolute location information to the location management function along with positioning measurement quantity.

In some embodiments, the method further includes:
receiving a positioning capability message or a PRU location information message sent from the PRU, where the positioning capability message or the PRU location information message carries absolute location information of the PRU.

In an embodiment, the absolute location information of PRU may be reported in multiple ways. For example, the PRU may jointly report its absolute location information to the location management function in the location capability message, or the PRU may directly report it to the location management function in a specific message (PRU location information message).

In some embodiments, before sending the first positioning information request message to the serving network device of the target terminal and/or the serving network device of the PRU, the operations further include:
obtaining support information for real-time double differential and/or DDEW from the serving network device of the target terminal, and/or obtaining support information for real-time double differential and/or DDEW from the serving network device of the PRU.

In an embodiment, before sending the first positioning information request message to the serving network device of the target terminal and/or the serving network device of the PRU, the first location management function may send a request to the serving network device of the target terminal and/or the serving network device of the PRU, requesting to obtain the support information of the serving network device of the target terminal and/or the serving network device of the PRU for real-time double differential and/or DDEW, such as whether it supports double differential, whether it supports first-type DDEW, whether it supports second-type DDEW, etc., to determine the appropriate real-time double differential configuration scheme based on the specific support of the network device.

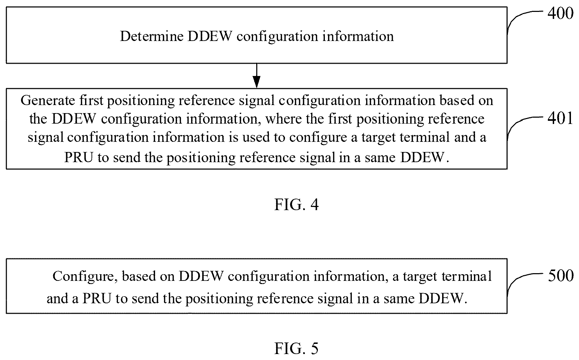

FIG. 4 is a third schematic flowchart of a method for sending a positioning reference signal according to an embodiment of the present application. This method may be performed by the first network device. As shown in FIG. 4, the method includes the following steps:
step 400: determining double differential effective window (DDEW) configuration information; and
step 401: generating first positioning reference signal configuration information based on the DDEW configuration information, where the first positioning reference signal configuration information is used to configure a target terminal and a positioning reference unit (PRU) to send the positioning reference signal in a same DDEW.

In an embodiment, the first network device may be the serving network device of the target terminal, or the serving network device of the PRU, or the serving network device of both the target terminal and the PRU (in case that the serving network device of the target terminal and the PRU is the same).

The first network device may determine the DDEW configuration information based on the DDEW parameter specified in the protocol, or based on the DDEW configuration information sent from the location management function, or based on the DDEW configuration information sent from other network devices, without limitation here.

In case of configuring positioning reference signal configuration information, such as receiving a positioning information request message sent from a location management function, the first network device may generate positioning reference signal configuration information of the target terminal and/or PRU based on the determined DDEW configuration information, and configure the target terminal and PRU to send the positioning reference signal in a same DDEW.

In some embodiments, the DDEW configuration information may be the configuration information of the first-type DDEW or the configuration information of the second-type DDEW, where the first-type DDEW is defined based on an absolute time-domain location and the second-type DDEW is defined based on a relative time-domain location.

In an embodiment, the DDEW defined in the present application may include two types: the first-type DDEW and the second-type DDEW. The first-type DDEW defines the absolute time-domain location of DDEW, while the second-type DDEW defines the relative time-domain location of DDEW (e.g.: a window length or duration, etc.).

In some embodiments, the configuration information of the first-type DDEW may include one or more of following parameters:
(1) a start time-domain unit, which is the start time domain location of DDEW, where the time-domain unit may be a radio frame, subframe, slot, or orthogonal frequency division multiplex (OFDM) symbol, etc.;
(2) a window length or duration, where the window length refers to a time length of DDEW, i.e., the duration of DDEW;
(3) an end time-domain unit, which is the end time domain location of DDEW;
(4) granularity of a time-domain unit, which is granularity used to define the time parameter of DDEW, where granularity may be a subframe, slot, or OFDM symbol; or
(5) a repetition period, which is the repetition period of DDEW.

In some embodiments, the configuration information of the second-type DDEW may include a window length or duration.

In the method for sending a positioning reference signal provided in embodiments of the present application, the serving network device of the target terminal and/or the serving network device of the PRU generates positioning reference signal configuration information based on DDEW configuration information, and configures the target terminal and PRU to send the positioning reference signal in a same DDEW, which may reduce the time interval between the target terminal and PRU sending the positioning reference signal, and improve the accuracy of real-time double differential positioning.

In some embodiments, determining the DDEW configuration information includes:
receiving a positioning information request message sent from a location management function, where the positioning information request message carries the DDEW configuration information.

In an embodiment, the location management function may carry DDEW configuration information in the positioning information request message when sending the positioning information request message to the first network device. The first network device may generate positioning reference signal configuration information based on the DDEW configuration information.

In some embodiments, in case that the DDEW configuration information is the configuration information of the second-type DDEW, the method further includes:
sending a first positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In an embodiment, the DDEW configuration information is the configuration information of the second-type DDEW. In case that the serving network device of the target terminal and the serving network device of the PRU are different, the serving network device of the target terminal and the serving network device of the PRU may coordinate with each other to configure the time interval for the target terminal and PRU sending the positioning reference signal to be less than or equal to the window length of the second-type DDEW.

For example, after the serving network device of the target terminal generates the positioning reference signal configuration information, the positioning reference signal configuration information (including the sending time of the positioning reference signal) and the configuration information of the second-type DDEW may be sent together to the serving network device of the PRU. In case of knowing the absolute time when the target terminal sends the positioning reference signal, the serving network device of the PRU may generate the positioning reference signal configuration information of the PRU based on the DDEW configuration information. The time interval between the target terminal and the PRU sending the positioning reference signal is less than or equal to the window length of the second-type DDEW.

For example, after the PRU serving network device generates the positioning reference signal configuration information, the positioning reference signal configuration information (including the sending time of the positioning reference signal) and the configuration information of the second-type DDEW may be sent together to the serving network device of the target terminal. In case of knowing the absolute time when the PRU sends the positioning reference signal, the serving network device of the target terminal may generate the positioning reference signal configuration information of the target terminal based on the DDEW configuration information. The time interval between the target terminal and the PRU sending the positioning reference signal is less than or equal to the window length of the second-type DDEW.

The serving base station of the target terminal and the serving base station of the PRU may directly notify the positioning reference signal configuration information and the configuration information of the second-type DDEW through an X2 or Xn interface.

In some embodiments, the method further includes:
sending support information of the first network device for real-time double differential and/or DDEW to a location management function.

In an embodiment, the serving network device of the target terminal and/or the serving network device of the PRU may report (such as reporting based on the request of the location management function, or actively reporting, etc., without limitation here) to the location management function its support information for real-time double differential and/or DDEW, such as whether it supports double differential, whether it supports the first-type DDEW, whether it supports the second-type DDEW, etc. The location management function may determine the appropriate real-time double differential configuration scheme based on the specific support of the network device.

FIG. 5 is a fourth schematic flowchart of a method for sending a positioning reference signal according to an embodiment of the present application, which may be performed by the head terminal. As shown in FIG. 5, the method includes the following steps:
step 500: configuring, based on double differential effective window (DDEW) configuration information, a target terminal and a positioning reference unit (PRU) to send the positioning reference signal in a same DDEW.

In an embodiment, for out-of-coverage scenarios of SL positioning, the head terminal may coordinate and configure the target terminal and PRU to send the positioning reference signal. In an embodiment, the head terminal may independently determine the DDEW configuration information, and then configure the target terminal and PRU to send the positioning reference signal in a same DDEW based on the DDEW configuration information.

In some embodiments, the above DDEW is the first-type DDEW or the second-type DDEW, where the first-type DDEW is defined based on an absolute time-domain location and the second-type DDEW is defined based on a relative time-domain location.

In an embodiment, the DDEW defined in the present application may include two types: the first-type DDEW and the second-type DDEW. The first-type DDEW defines the absolute time-domain location of DDEW, while the second-type DDEW defines the relative time-domain location of DDEW (e.g.: a window length or duration, etc.).

In some embodiments, the configuration parameter of the first-type DDEW includes one or more of the following:
(1) a start time-domain unit, which is the start time domain location of DDEW, where the time-domain unit may be a radio frame, subframe, slot, or orthogonal frequency division multiplex (OFDM) symbol, etc.;
(2) a window length or duration, where the window length refers to a time length of DDEW, i.e., the duration of DDEW;
(3) an end time-domain unit, which is the end time domain location of DDEW;
(4) granularity of a time-domain unit, which is granularity used to define the time parameter of DDEW, where granularity may be a subframe, slot, or OFDM symbol; or
(5) a repetition period, which is the repetition period of DDEW.

In some embodiments, the configuration information of the second-type DDEW may include a window length or duration.

In the method for sending a positioning reference signal provided in embodiments of the present application, the head terminal generates the positioning reference signal configuration information based on the DDEW configuration information, and configures the target terminal and PRU to send the positioning reference signal in a same DDEW, which may reduce the time interval between the target terminal and PRU sending the positioning reference signal, and improve the accuracy of real-time double differential positioning.

In some embodiments, the method further includes:
sending second indication information to a receiving node of the positioning reference signal, where the second indication information is used to indicate different receiving nodes to measure the positioning reference signal sent from the target terminal and the PRU respectively in the same DDEW.

In an embodiment, the head terminal may send second indication information to the receiving node of the positioning reference signal, to indicate different receiving nodes to measure the positioning reference signals sent from the target terminal and PRU respectively in the same DDEW, further ensuring the accuracy of the real-time double differential positioning method.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

In an embodiment, in case that the head terminal performs a positioning calculation, after receiving the positioning measurement quantity information measured by each receiving node of the positioning reference signal, the head terminal may determine the validity of the positioning measurement quantity. Only the valid positioning measurement quantity is used for positioning calculation to calculate the position of the target terminal.

The DDEW information associated with the positioning measurement quantity may be associated information of a DDEW where a measurement time of the positioning measurement quantity is located, such as DDEW configuration information or time parameter information.

In an embodiment, each receiving node of the positioning reference signal receives SL PRS sent from the target terminal and PRU respectively in the same DDEW instance, and reports the positioning measurement quantity and associated information of the same DDEW instance where the measurement quantity is located (at least including a timestamp with OFDM symbol as granularity, for example: a start radio frame number, a start slot offset in the radio frame, and a start OFDM symbol offset in the start slot, etc.). Afterwards, the head terminal determines whether the times corresponding to the positioning measurement quantities reported by each receiving node for the target terminal and PRU are in the same DDEW instance. If so, the positioning measurement quantity is valid; otherwise, the positioning measurement quantity is invalid.

The methods provided in each embodiment of the present application are based on a same application concept. The implementation of each method may refer to each other, and the repetition will not be repeated.

The following examples illustrate the methods provided in the above embodiments of the present application through specific application scenarios.

Example I: an LMF coordinates uniformly in UL, and a serving base station of target UE and a serving base station of a PRU are the same.

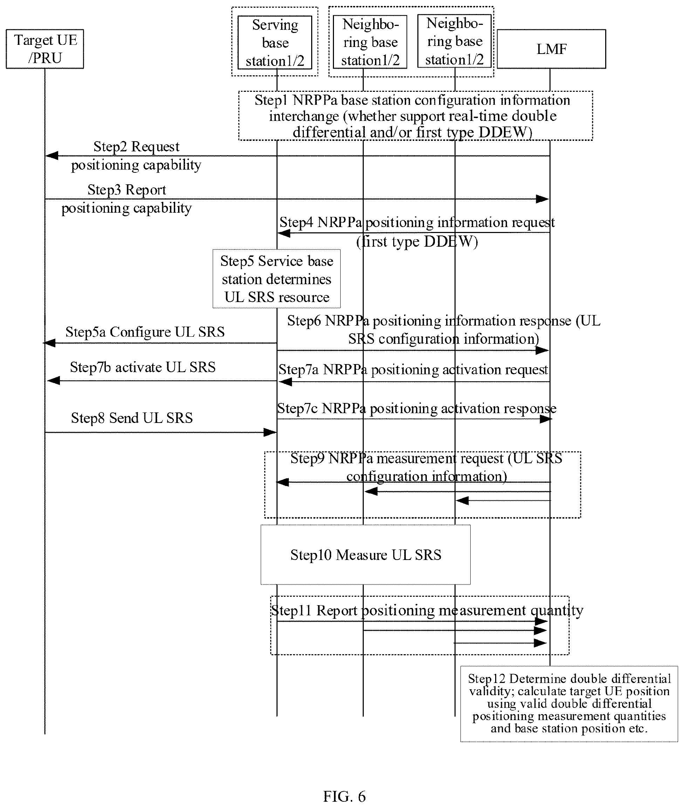

FIG. 6 is a first schematic flowchart of an embodiment of a method for sending a positioning reference signal according to an embodiment of the present application. The following will be introduced in order of steps.

Step 1: the LMF obtains base station information used for uplink double differential positioning through an NR Positioning Protocol A (NRPPa) message, including whether it supports real-time double differential and first-type DDEW. The serving base station 1/2 (the serving base station of the target UE/PRU) reports the base station/TRP information used for uplink double differential positioning to the LMF through the NRPPa message, including whether the base station supports real-time double differential and the first-type DDEW.

Step 2: the LMF requests the positioning capability of the target UE/PRU through a Location Protocol Privacy (LPP) Protocol, including the positioning methods supported by the UE/PRU and the support for UL SRS.

Step 3: the target UE/PRU reports its positioning capability to the LMF through the LPP Protocol, including the positioning methods supported by the UE/PRU and the support for UL SRS. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 4: the LMF sends an NRPPa positioning information request message to the serving base station, requesting the UL SRS configuration information of the target UE/PRU and providing the first-type DDEW configuration information.

Step 5: the serving base station determines a resource available for UL SRS and configures a UL SRS resource set for the target UE based on the first-type DDEW configuration information obtained in step 4.

Step 6: the serving base station provides UL SRS configuration information to the LMF in an NRPPa positioning information response message.

Step 7: in case of semi-persistent or aperiodic SRS, the LMF may request activation of UL SRS transmission by sending an NRPPa positioning activation request message to the serving base station of the target UE/PRU. Then, the base station activates the UL SRS transmission and sends an NRPPa positioning activation response message.

Step 8: the target UE/PRU starts sending the UL SRS based on UL SRS time-domain resource configuration.

Step 9: the LMF notifies all serving base stations and neighboring base stations to perform uplink measurements through an NRPPa measurement request (including UL SRS configuration information).

Step 10: all serving base stations and neighboring base stations perform uplink measurements.

Step 11: the measurement quantity is reported to the LMF through NRPPa signaling. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 12: the LMF performs double differential validity determination based on the associated information of the DDEW instance where the reported measurement quantity is located. Only valid double differential positioning measurement quantities are used for double differential positioning calculation to calculate the target UE location. The validity determination conditions are: the LMF determines whether the times corresponding to the positioning measurement quantities reported by the target UE and PRU are in the same DDEW instance. If so, the positioning measurement quantity is valid; otherwise, the positioning measurement quantity is invalid.

Example IIA: a serving base station of the target UE and a serving base station of the PRU are different in UL, and there is mutual coordination between the serving base station of the target UE and the serving base station of the PRU.

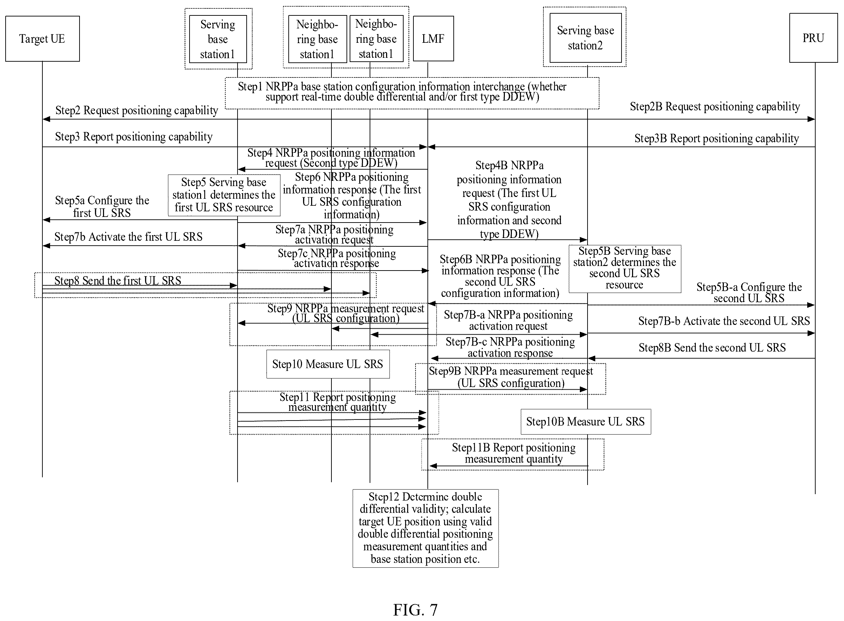

FIG. 7 is a second schematic flowchart of an embodiment of a method for sending a positioning reference signal according to an embodiment of the present application. The following will be introduced in order of steps. Steps 1-11 are processing steps among an LMF, target UE, and the serving base station/neighboring base station of the target UE, and step 12 is a common step. Steps 1B to 11B are processing steps among the LMF, a PRU, and a serving base station/neighboring base station of the PRU. Unless otherwise specified, steps 1B to 11B will not be separately described below (similar to steps 1 to 11). Compared to FIG. 6 of Example I, a new step 4B is added, and the step 4B is performed after step 6.

Step 1: the LMF obtains base station information for uplink double differential positioning through an NRPPa message, including whether it supports real-time double differential and second-type DDEW. Serving base station 1/2 (serving base station 1 is the serving base station of the target UE, and serving base station 2 is the serving base station of the PRU) reports the base station/TRP information for uplink double differential positioning to the LMF through the NRPPa message, including whether the base station supports real-time double differential and the second-type DDEW.

Step 2: the LMF requests the positioning capability of the target UE/PRU through a Location Protocol Privacy (LPP) Protocol, including the positioning methods supported by the UE/PRU and the support for UL SRS.

Step 3: the target UE/PRU reports its positioning capability to the LMF through the LPP Protocol, including the positioning methods supported by the UE/PRU and the support for UL SRS. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 4: the LMF sends an NRPPa positioning information request message to the serving base station of the target UE, requesting the UL SRS configuration information of the target UE and providing second-type DDEW configuration information.

Step 5: the serving base station of the target UE determines a resource available for UL SRS and configures a UL SRS resource set for the target UE based on the second-type DDEW configuration information obtained in step 4.

Step 6: the serving base station provides UL SRS configuration information to the LMF in an NRPPa positioning information response message.

Step 4B: the LMF sends the NRPPa positioning information request message (including the first UL SRS configuration information of the target UE and the second-type DDEW configuration information) to the serving base station of the PRU, requesting the serving base station of the PRU to determine the second UL SRS configuration information for the PRU (the time interval between the UL SRS sending time of PRU and the UL SRS sending time of the target UE is configured to be less than or equal to the window length of the second-type DDEW).

Step 5B: the serving base station of the PRU determines the resource available for UL SRS, and configures the UL SRS resource set for PRU based on the first UL SRS configuration information and the second-type DDEW configuration information of the target UE obtained in step 4B.

Step 7: in case of semi-persistent or aperiodic SRS, the LMF may request activation of UL SRS transmission by sending an NRPPa positioning activation request message to the serving base station of the target UE/PRU. Then, the base station activates the UL SRS transmission and sends an NRPPa positioning activation response message.

Step 8: the target UE starts sending the UL SRS based on UL SRS time-domain resource configuration.

Step 9: the LMF notifies all serving base stations and neighboring base stations to perform uplink measurements through an NRPPa measurement request (including UL SRS configuration information).

Step 10: all serving base stations and neighboring base stations perform uplink measurements.

Step 11: the measurement quantity is reported to the LMF through NRPPa signaling. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 12: the LMF performs double effective difference validity determination based on the associated information of the DDEW instance where the reported measurement quantity is located. Only valid double differential positioning measurement quantities are used for double differential positioning calculation to calculate the target UE location. The validity determination conditions are: the LMF determines whether the times corresponding to the positioning measurement quantities reported by the target UE and PRU are in the same DDEW instance. If so, the positioning measurement quantity is valid; otherwise, the positioning measurement quantity is invalid.

Example IIB: a serving base station of target UE and a serving base station of a PRU are different in UL, and there is mutual coordination between the serving base station of the target UE and the serving base station of the PRU.

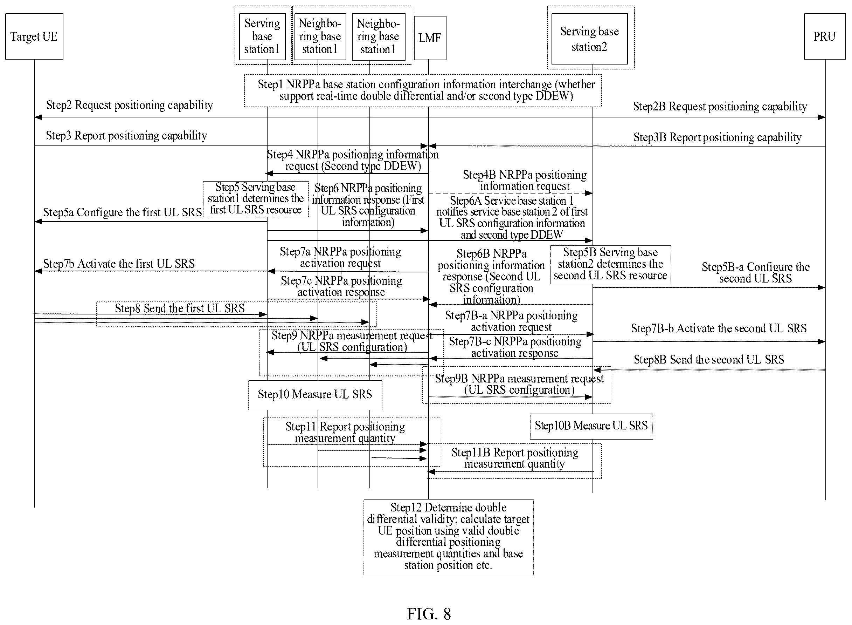

FIG. 8 is a third schematic flowchart of an embodiment of a method for sending a positioning reference signal according to an embodiment of the present application. The following will be introduced in order of steps. Compared to FIG. 7 of Example IIA, a new step 6A is added, and step 4B is optional.

Step 1: the LMF obtains base station information for uplink double differential positioning through an NRPPa message, including whether it supports real-time double differential and second-type DDEW. Serving base station 1/2 (serving base station 1 is the serving base station of the target UE, and serving base station 2 is the serving base station of the PRU) reports the base station/TRP information for uplink double differential positioning to the LMF through the NRPPa message, including whether the base station supports real-time double differential and the second-type DDEW.

Step 2: the LMF requests the positioning capability of the target UE/PRU through a Location Protocol Privacy (LPP) Protocol, including the positioning methods supported by the UE/PRU and the support for UL SRS.

Step 3: the target UE/PRU reports its positioning capability to the LMF through the LPP Protocol, including the positioning methods supported by the UE/PRU and the support for UL SRS. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 4: the LMF sends an NRPPa positioning information request message to the serving base station of the target UE, requesting the UL SRS configuration information of the target UE and providing second-type DDEW configuration information.

Step 5: the serving base station of the target UE determines a resource available for UL SRS and configures a UL SRS resource set for the target UE based on the second-type DDEW configuration information obtained in step 4.

Step 6: the serving base station provides UL SRS configuration information to the LMF in an NRPPa positioning information response message.

Step 6A (in no particular order between step 6): the serving base station of the target UE notifies the serving base station of the PRU of the first UL SRS configuration information and the second-type DDEW configuration information, for the serving base station of the PRU to determine the second UL SRS configuration information in step 5B.

Step 5B: the serving base station of the PRU determines the resource available for UL SRS, and configures the UL SRS resource set for PRU based on the first UL SRS configuration information and the second-type DDEW configuration information of the target UE obtained in step 6A.

Step 7: in case of semi-persistent or aperiodic SRS, the LMF may request activation of UL SRS transmission by sending an NRPPa positioning activation request message to the serving base station of the target UE/PRU. Then, the base station activates the UL SRS transmission and sends an NRPPa positioning activation response message.

Step 8: the target UE starts sending the UL SRS based on UL SRS time-domain resource configuration.

Step 9: the LMF notifies all serving base stations and neighboring base stations to perform uplink measurements through an NRPPa measurement request (including UL SRS configuration information).

Step 10: all serving base stations and neighboring base stations perform uplink measurements.

Step 11: the measurement quantity is reported to the LMF through NRPPa signaling. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 12: the LMF performs double effective difference validity determination based on the associated information of the DDEW instance where the reported measurement quantity is located. Only valid double differential positioning measurement quantities are used for double differential positioning calculation to calculate the target UE location. The validity determination conditions are: the LMF determines whether the times corresponding to the positioning measurement quantities reported by the target UE and PRU are in the same DDEW instance. If so, the positioning measurement quantity is valid; otherwise, the positioning measurement quantity is invalid.

Example III: a coordination way between different LMFs in UL is provided, in case that target UE and a PRU are connected to different LMFs.

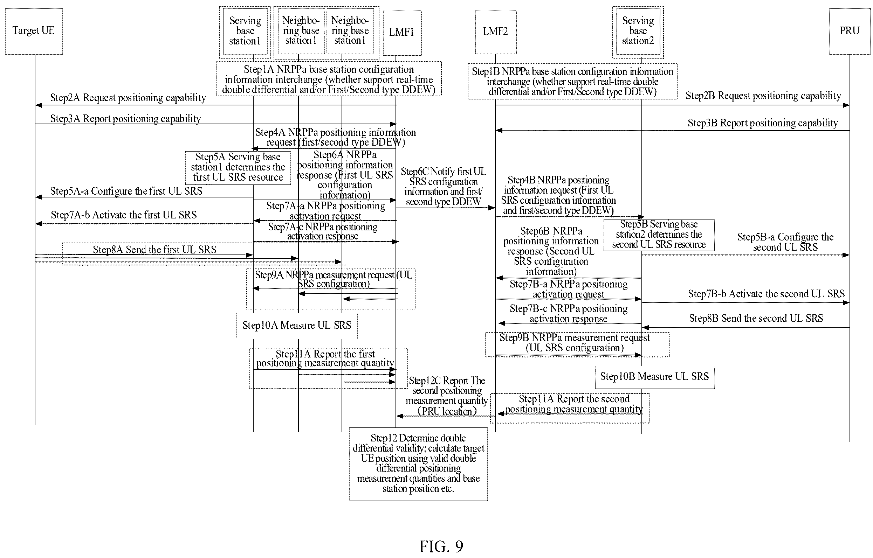

FIG. 9 is a fourth schematic flowchart of an embodiment of a method for sending a positioning reference signal according to an embodiment of the present application. LMF1 connected to the target UE and LMF2 connected to the PRU negotiate. It is recommended that the serving base station where the target UE and PRU are located schedule the target UE and PRU to send UL SRS in the same first/second-type DDEW instance based on the recommended first/second-type DDEW parameters after LMF1/2 negotiation. In some embodiments, the LMF1/2 may also provide specific time-domain location information in the recommended first-type DDEW window to avoid conflicts in the sending time of UL SRS allocated by the serving base station of the target UE and the serving base station of the PRU, respectively. Compared to FIG. 7 and FIG. 8, new steps 6C and 12C are added.

Steps 1A and 1B: the LMF obtains base station information for uplink double differential positioning through an NRPPa message, including whether it supports real-time double differential and second-type DDEW. Serving base station 1/2 (serving base station 1 is the serving base station of the target UE, and serving base station 2 is the serving base station of the PRU) reports the base station/TRP information for uplink double differential positioning to the LMF through the NRPPa message, including whether the base station supports real-time double differential and first/second-type DDEW.

Steps 2A and 2B: the LMF requests the positioning capability of the target UE/PRU through a Location Protocol Privacy (LPP) Protocol, including the positioning methods supported by the UE/PRU and the support for UL SRS.

Steps 3A and 3B: the target UE/PRU reports its positioning capability to the LMF through the LPP Protocol, including the positioning methods supported by the UE/PRU and the support for UL SRS. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 4A: the LMF sends an NRPPa positioning information request message to the serving base station of the target UE, requesting the UL SRS configuration information of the target UE and providing the first/second-type DDEW configuration information.

Step 5A: the serving base station of the target UE determines a resource available for UL SRS and configures a UL SRS resource set for the target UE based on the first/second-type DDEW configuration information obtained in step 4A.

Step 6A: the serving base station of the target UE provides the first UL SRS configuration information of the target UE to the LMF1 in an NRPPa positioning information response message.

Step 6C: the LMF1 notifies the LMF2 of the first UL SRS configuration information and the first/second-type DDEW configuration parameters.

Step 4B: the LMF2 sends the NRPPa positioning information request message (including the first UL SRS configuration information and the first/second-type DDEW configuration information of the target UE) to the serving base station of the PRU, requesting the serving base station of the PRU to determine the second UL SRS configuration information for the PRU.

Step 5B: the serving base station of the PRU determines the resources available for UL SRS, and configures the UL SRS resource set for PRU based on the first UL SRS configuration information and the first/second-type DDEW configuration information of the target UE obtained in step 4B.

Step 7: in case of semi-persistent or aperiodic SRS, the LMF may request activation of UL SRS transmission by sending an NRPPa positioning activation request message to the serving base station of the target UE/PRU. Then, the base station activates the UL SRS transmission and sends an NRPPa positioning activation response message.

Step 8: the target UE starts sending the UL SRS based on UL SRS time-domain resource configuration.

Step 9: the LMF notifies all serving base stations and neighboring base stations to perform uplink measurements through an NRPPa measurement request (including UL SRS configuration information).

Step 10: all serving base stations and neighboring base stations perform uplink measurements.

Step 11: the measurement quantity is reported to the LMF through NRPPa signaling. For the PRU, the absolute location coordinate information of the PRU may be jointly reported to the LMF along with a UL positioning measurement quantity, or jointly reported to the LMF in the reported positioning capability message, or separately reported to the LMF in a specific message.

Step 12C: the LMF2 reports the second positioning measurement quantity (as well as a PRU location) to the LMF1.

Step 12: the LMF1 performs double effective difference validity determination based on the associated information of the DDEW instance where the reported measurement quantity is located. Only valid double differential positioning measurement quantities are used for double differential positioning calculation to calculate the target UE location. The validity determination conditions are: the LMF determines whether the times corresponding to the positioning measurement quantities reported by the target UE and PRU are in the same DDEW instance. If so, the positioning measurement quantity is valid; otherwise, the positioning measurement quantity is invalid.

Example IV: a uniform coordination way of head UE in SL is provided, supporting a first-type DDEW and a second-type DDEW.

First, a real-time double differential configuration method for DDEW of target UE and PRU includes the following two methods: 1) head UE schedules a sending time of a corresponding SL PRS to be in a same DDEW based on a first-type DDEW configuration parameter; and 2) the head UE schedules a time interval of sending times of the corresponding SL PRS to be less than or equal to a window length of a second-type DDEW based on a second-type DDEW configuration parameter.

Second, a measurement quantity indication and reporting method of different receiving nodes for real-time double differential in SL are as follows: based on indication of SL head UE, receiving nodes (RSU/anchor UE) of target UE and a PRU respectively receive an SL PRS sent by the target UE and PRU in a same DDEW instance, and report the SL positioning measurement quantity and associated information of the same DDEW instance where the measurement quantity is located (at least including a timestamp with OFDM symbol as granularity, for example: a start radio frame number, a start slot offset in the radio frame, and a start OFDM symbol offset in the start slot, etc.). The positioning measurement quantity includes an SL POA and an SL RTOA.

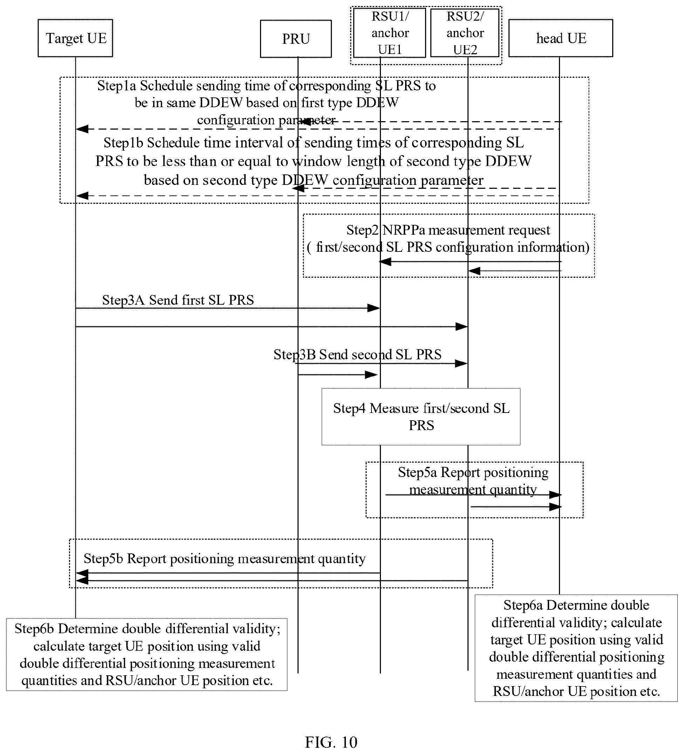

FIG. 10 is a fifth schematic flowchart of an embodiment of a method for sending a positioning reference signal according to an embodiment of the present application. The following will be introduced in order of steps.

Step 1a: head UE schedules a sending time of a corresponding SL PRS to be in a same DDEW based on a first-type DDEW configuration parameter.

Step 1b: the head UE schedules a time interval of sending times of the corresponding SL PRS to be less than or equal to a window length of a second-type DDEW based on a second-type DDEW configuration parameter.

Step 2: the head UE sends an NRPPa measurement request (first/second SL PRS configuration information) to RSU1/anchor UE1 and RSU2/anchor UE2.

Step 3A: the target UE sends a first SL PRS to the RSU1/anchor UE1 and the RSU2/anchor UE2.

Step 3B: a PRU sends a second SL PRS to the RSU1/anchor UE1 and the RSU2/anchor UE2.

Step 4: the RSU1/anchor UE1 and the RSU2/anchor UE2 measure the first/second SL PRS.

Step 5a, the RSU1/anchor UE1 and the RSU2/anchor UE2 report a positioning measurement quantity to the head UE; or,
step 5b: the RSU1/anchor UE1 and the RSU2/anchor UE2 report a positioning measurement quantity to the target UE.

Step 6a: the head UE performs double differential validity determination, using an effective double differential positioning measurement quantity and RSU/anchor UE location information etc. to calculate a position of the target UE; or,
step 6b: the target UE performs double differential validity determination, using an effective double differential positioning measurement quantity and RSU/anchor UE location information to calculate a position of the target UE.

The methods and apparatuses provided in each embodiment of the present application are based on the same application concept. As the principles of problem-solving by the methods and apparatuses are similar, the implementation of the apparatuses and methods may be referred to each other, and repetition will not be repeated.

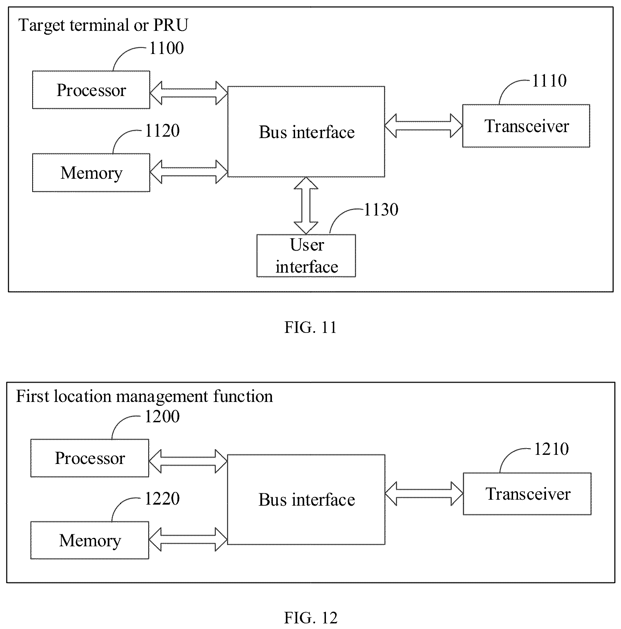

FIG. 11 is a schematic structural diagram of a target terminal or PRU according to an embodiment of the present application. As shown in FIG. 11, the target terminal or PRU includes a memory 1120, a transceiver 1110, and a processor 1100, where the processor 1100 and the memory 1120 may also be arranged physically separately.

The memory 1120 is used for storing a computer program, and the transceiver 1100 is used for receiving and transmitting data under control of the processor 1100.

In an embodiment, the transceiver 1110 is used to receive and transmit data under control of the processor 1100.

In FIG. 11, a bus architecture may include any number of interconnected buses and bridges, which are linked together through various circuits of one or more processors represented by the processor 1100 and one or more memories represented by the memory 1120. The bus architecture may also link together various other circuits, such as peripherals, voltage regulators, and power management circuits, which are well known in the art, and therefore will not be further described in the present application. The bus interface provides an interface. The transceiver 1110 may include multiple elements, i.e., a transmitter and a receiver, units for providing communication with various other devices over transmission media including wireless channels, wired channels, fiber optic cables, and the like. For different user equipment, a user interface 1130 may be an interface capable of externally or internally connecting the required device, and the connected device includes, but not limited to, a keypad, a display, a speaker, a microphone, a joystick, and the like.

The processor 1100 is responsible for managing the bus architecture and general processing, and the memory 1120 may store data used by the processor 1100 when performing operations.

The processor 1100 may be a central processing unit (CPU), an application specific integrated circuit (ASIC), a field-programmable gate array (FPGA), or a complex programmable logic device (CPLD). The processor may also use a multi-core architecture.

The processor 1100 uses the computer program stored in the memory 1120 to execute any of the methods provided in embodiments of the present application according to the obtained executable instructions, such as: receiving positioning reference signal configuration information, where the positioning reference signal configuration information is used to configure a target terminal and a positioning reference unit (PRU) to send the positioning reference signal in a same double differential effective window (DDEW); and sending the positioning reference signal based on the positioning reference signal configuration information.

In some embodiments, the DDEW is a first-type DDEW or a second-type DDEW, where the first-type DDEW is defined based on an absolute time-domain location and the second-type DDEW is defined based on a relative time-domain location.

In some embodiments, the configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the method further includes:
before receiving the positioning reference signal configuration information, sending, by the PRU, a positioning capability message to a location management function or the target terminal, where the positioning capability message carries absolute location information of the PRU; or
before receiving the positioning reference signal configuration information, sending, by the PRU, a PRU location information message to a location management function or the target terminal, where the PRU location information message carries absolute location information of the PRU.

In some embodiments, the method further includes:
receiving, by the target terminal, positioning measurement quantity information, where the positioning measurement quantity information includes a positioning measurement quantity and DDEW information associated with the positioning measurement quantity; and
determining, by the target terminal, validity of the positioning measurement quantity based on the positioning measurement quantity information.

FIG. 12 is a schematic structural diagram of a first location management function according to an embodiment of the present application. As shown in FIG. 12, the first location management function includes a memory 1220, a transceiver 1210, and a processor 1200, where the processor 1200 and the memory 1220 may also be arranged physically separately.

The memory 1220 is used for storing a computer program, and the transceiver 1210 is used for receiving and transmitting data under control of the processor 1200.

In an embodiment, the transceiver 1210 is used to receive and transmit data under control of the processor 1200.

In FIG. 12, a bus architecture may include any number of interconnected buses and bridges, which are linked together through various circuits of one or more processors represented by the processor 1200 and one or more memories represented by the memory 1220. The bus architecture may also link together various other circuits, such as peripherals, voltage regulators, and power management circuits, which are well known in the art, and therefore will not be further described in the present application. The bus interface provides an interface. The transceiver 1210 may include multiple elements, i.e., a transmitter and a receiver, units for providing communication with various other devices over transmission media including wireless channels, wired channels, fiber optic cables, and the like.

The processor 1200 is responsible for managing the bus architecture and general processing, and the memory 1220 may store data used by the processor 1200 when performing operations.

The processor 1200 may be a central processing unit (CPU), an application specific integrated circuit (ASIC), a field-programmable gate array (FPGA), or a complex programmable logic device (CPLD). The processor may also use a multi-core architecture.

The processor 1200 uses the computer program stored in the memory 1220 to execute any of the methods provided in embodiments of the present application according to the obtained executable instructions, such as: sending a first positioning information request message to a serving network device of a target terminal and/or a serving network device of a positioning reference unit (PRU), where the first positioning information request message carries double differential effective window (DDEW) configuration information.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, in case that the DDEW configuration information is the configuration information of the second-type DDEW, after sending the configuration information of the second-type DDEW to the first network device, the method further includes:
receiving positioning reference signal configuration information sent from the first network device; and
sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In some embodiments, before sending the first positioning information request message to the serving network device of the target terminal or the serving network device of the PRU, the method further includes:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In some embodiments, the method further includes:
sending first indication information to a receiving node of the positioning reference signal, where the first indication information is used to indicate different receiving nodes to measure the positioning reference signal sent from the target terminal and the PRU respectively in the same DDEW.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

In some embodiments, receiving positioning measurement quantity information includes:
receiving the positioning measurement quantity information sent from the serving network device of the PRU, where the positioning measurement quantity information also carries absolute location information of the PRU.

In some embodiments, the method further includes:
receiving a positioning capability message or a PRU location information message sent from the PRU, where the positioning capability message or the PRU location information message carries absolute location information of the PRU.

In some embodiments, before sending the first positioning information request message to the serving network device of the target terminal and/or the serving network device of the PRU, the operations further include:
obtaining support information for real-time double differential and/or DDEW from the serving network device of the target terminal, and/or obtaining support information for real-time double differential and/or DDEW from the serving network device of the PRU.

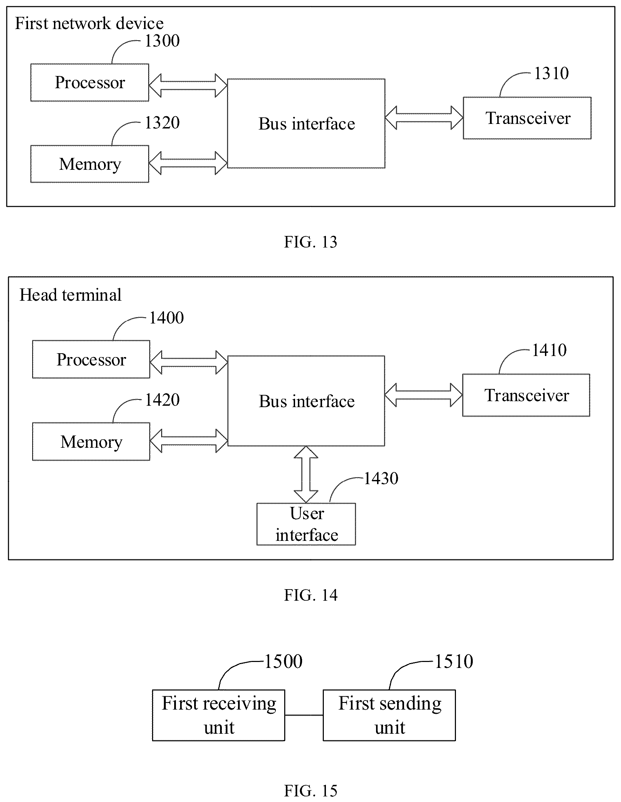

FIG. 13 is a schematic structural diagram of a first network device according to an embodiment of the present application. As shown in FIG. 13, the first network device includes a memory 1320, a transceiver 1310, and a processor 1300, where the processor 1300 and the memory 1320 may also be arranged physically separately.

The memory 1320 is used for storing a computer program, and the transceiver 1310 is used for receiving and transmitting data under control of the processor 1300.

In an embodiment, the transceiver 1310 is used to receive and transmit data under control of the processor 1300.

In FIG. 13, a bus architecture may include any number of interconnected buses and bridges, which are linked together through various circuits of one or more processors represented by the processor 1300 and one or more memories represented by the memory 1320. The bus architecture may also link together various other circuits, such as peripherals, voltage regulators, and power management circuits, which are well known in the art, and therefore will not be further described in the present application. The bus interface provides an interface. The transceiver 1310 may include multiple elements, i.e., a transmitter and a receiver, units for providing communication with various other devices over transmission media including wireless channels, wired channels, fiber optic cables, and the like.

The processor 1300 is responsible for managing the bus architecture and general processing, and the memory 1320 may store data used by the processor 1300 when performing operations.

The processor 1300 may be a central processing unit (CPU), an application specific integrated circuit (ASIC), a field-programmable gate array (FPGA), or a complex programmable logic device (CPLD). The processor may also use a multi-core architecture.

The processor 1300 uses the computer program stored in the memory 1320 to execute any of the methods provided in embodiments of the present application according to the obtained executable instructions, such as: determining double differential effective window (DDEW) configuration information; and generating first positioning reference signal configuration information based on the DDEW configuration information, where the first positioning reference signal configuration information is used to configure a target terminal and a positioning reference unit (PRU) to send the positioning reference signal in a same DDEW.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, determining the DDEW configuration information includes:
receiving a positioning information request message sent from a location management function, where the positioning information request message carries the DDEW configuration information.

In some embodiments, in case that the DDEW configuration information is the configuration information of the second-type DDEW, the method further includes:
sending the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

In some embodiments, the method further includes:
sending support information of the first network device for real-time double differential and/or DDEW to a location management function.

FIG. 14 is a schematic structural diagram of a head terminal according to an embodiment of the present application. As shown in FIG. 14, the head terminal includes a memory 1420, a transceiver 1410, and a processor 1400, where the processor 1400 and the memory 1420 may also be arranged physically separately.

The memory 1420 is used for storing a computer program, and the transceiver 1410 is used for receiving and transmitting data under control of the processor 1400.

In an embodiment, the transceiver 1410 is used to receive and transmit data under control of the processor 1400.

In FIG. 14, a bus architecture may include any number of interconnected buses and bridges, which are linked together through various circuits of one or more processors represented by the processor 1400 and one or more memories represented by the memory 1420. The bus architecture may also link together various other circuits, such as peripherals, voltage regulators, and power management circuits, which are well known in the art, and therefore will not be further described in the present application. The bus interface provides an interface. The transceiver 1410 may include multiple elements, i.e., a transmitter and a receiver, units for providing communication with various other devices over transmission media including wireless channels, wired channels, fiber optic cables, and the like. For different user equipment, a user interface 1430 may be an interface capable of externally or internally connecting the required device, and the connected device includes, but not limited to, a keypad, a display, a speaker, a microphone, a joystick, and the like.

The processor 1400 is responsible for managing the bus architecture and general processing, and the memory 1420 may store data used by the processor 1400 when performing operations.

The processor 1400 may be a central processing unit (CPU), an application specific integrated circuit (ASIC), a field-programmable gate array (FPGA), or a complex programmable logic device (CPLD). The processor may also use a multi-core architecture.

The processor 1400 uses the computer program stored in the memory 1420 to execute any of the methods provided in embodiments of the present application according to the obtained executable instructions, such as: configuring, based on double differential effective window (DDEW) configuration information, a target terminal and a positioning reference unit (PRU) to send the positioning reference signal in a same DDEW.

In some embodiments, DDEW is the first-type DDEW or the second-type DDEW, where the first-type DDEW is defined based on an absolute time-domain location and the second-type DDEW is defined based on a relative time-domain location.

In some embodiments, the configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the method further includes:
sending second indication information to a receiving node of the positioning reference signal, where the second indication information is used to indicate different receiving nodes to measure the positioning reference signal sent from the target terminal and the PRU respectively in the same DDEW.

In some embodiments, the method further includes:
receiving positioning measurement quantity information, where the positioning measurement quantity information includes a positioning measurement quantity and DDEW information associated with the positioning measurement quantity; and
determining validity of the positioning measurement quantity based on the positioning measurement quantity information.

It should be noted that the target terminal, the PRU, the first location management function, the first network device, and the head terminal provided in embodiments of the present application may achieve all the method steps implemented in the above method embodiments, and may achieve the same technical effects. The same parts and beneficial effects as the corresponding method embodiments in this embodiment are not repeated here.

FIG. 15 is a first schematic structural diagram of an apparatus for sending a positioning reference signal according to an embodiment of the present application. As shown in FIG. 15, the apparatus includes:
a first receiving unit 1500, used for receiving positioning reference signal configuration information, where the positioning reference signal configuration information is used to configure a target terminal and a positioning reference unit (PRU) to send the positioning reference signal in a same double differential effective window (DDEW); and
a first sending unit 1510, used for sending the positioning reference signal based on the positioning reference signal configuration information.

In some embodiments, the DDEW is a first-type DDEW or a second-type DDEW, where the first-type DDEW is defined based on an absolute time-domain location and the second-type DDEW is defined based on a relative time-domain location.

In some embodiments, the configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the first sending unit 1510 is further used for:
before receiving the positioning reference signal configuration information, sending, by the PRU, a positioning capability message to a location management function or the target terminal, where the positioning capability message carries absolute location information of the PRU; or
before receiving the positioning reference signal configuration information, sending, by the PRU, a PRU location information message to a location management function or the target terminal, where the PRU location information message carries absolute location information of the PRU.

In some embodiments, the apparatus further includes:
a second receiving unit, used for the target terminal to receive positioning measurement quantity information, where the positioning measurement quantity information includes a positioning measurement quantity and DDEW information associated with the positioning measurement quantity; and
a first determining unit, used for the target terminal to determine validity of the positioning measurement quantity based on the positioning measurement quantity information.

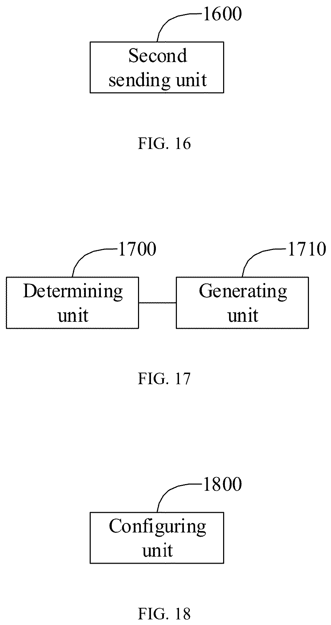

FIG. 16 is a second schematic structural diagram of an apparatus for sending a positioning reference signal according to an embodiment of the present application. As shown in FIG. 16, the apparatus includes:
a second sending unit 1600, used for sending a first positioning information request message to a serving network device of a target terminal and/or a serving network device of a positioning reference unit (PRU), where the first positioning information request message carries double differential effective window (DDEW) configuration information.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, the apparatus further includes:
a third receiving unit, used for receiving, in case that the DDEW configuration information is the configuration information of the second-type DDEW, positioning reference signal configuration information sent from the first network device, after sending the configuration information of the second-type DDEW to a first network device; and
a third sending unit, used for sending a second positioning information request message to a second network device, where the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

In some embodiments, the apparatus further includes:
a fourth receiving unit, used for receiving, before sending the first positioning information request message to the serving network device of the target terminal or the serving network device of the PRU, the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

In some embodiments, the second sending unit 1600 is further used for:
sending first indication information to a receiving node of the positioning reference signal, where the first indication information is used to indicate different receiving nodes to measure the positioning reference signal sent from the target terminal and the PRU respectively in the same DDEW.

In some embodiments, the apparatus further includes:
a fifth receiving unit, used for receiving positioning measurement quantity information, where the positioning measurement quantity information includes a positioning measurement quantity and DDEW information associated with the positioning measurement quantity; and
a second determining unit, used for determining validity of the positioning measurement quantity based on the positioning measurement quantity information.

In some embodiments, receiving the positioning measurement quantity information includes:
receiving the positioning measurement quantity information sent from the serving network device of the PRU, where the positioning measurement quantity information also carries absolute location information of the PRU.

In some embodiments, the apparatus further includes:
a sixth receiving unit, used for receiving a positioning capability message or a PRU location information message sent from the PRU, where the positioning capability message or the PRU location information message carries absolute location information of the PRU.

In some embodiments, the apparatus further includes:
an obtaining unit, used for obtaining, before sending the first positioning information request message to the serving network device of the target terminal and/or the serving network device of the PRU, support information for real-time double differential and/or DDEW from the serving network device of the target terminal, and/or support information for real-time double differential and/or DDEW from the serving network device of the PRU.

FIG. 17 is a third schematic structural diagram of an apparatus for sending a positioning reference signal according to an embodiment of the present application. As shown in FIG. 17, the apparatus includes:
a determining unit 1700, used for determining double differential effective window (DDEW) configuration information; and
a generating unit 1710, used for generating first positioning reference signal configuration information based on the DDEW configuration information, where the first positioning reference signal configuration information is used to configure a target terminal and a positioning reference unit (PRU) to send the positioning reference signal in a same DDEW.

In some embodiments, the DDEW configuration information is configuration information of a first-type DDEW or configuration information of a second-type DDEW, where the first-type DDEW is defined based on an absolute time-domain location and the second-type DDEW is defined based on a relative time-domain location.

In some embodiments, the configuration information of the first-type DDEW includes one or more of following parameters:
a start time-domain unit;
a window length or duration;
an end time-domain unit;
granularity of a time-domain unit; or
a repetition period.

In some embodiments, the configuration information of the second-type DDEW includes a window length or duration.

In some embodiments, determining the DDEW configuration information includes:
receiving a positioning information request message sent from a location management function, where the positioning information request message carries the DDEW configuration information.

In some embodiments, the apparatus further includes:
a fourth sending unit, used for sending, in case that the DDEW configuration information is the configuration information of the second-type DDEW, the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

In some embodiments, the apparatus further includes:
a fifth sending unit, used for sending support information of the first network device for real-time double differential and/or DDEW to a location management function.

FIG. 18 is a fourth schematic structural diagram of an apparatus for sending a positioning reference signal according to an embodiment of the present application. As shown in FIG. 18, the apparatus includes:
a configuring unit, used for configuring, based on double differential effective window (DDEW) configuration information, a target terminal and a positioning reference unit (PRU) to send the positioning reference signal in a same DDEW.

In some embodiments, DDEW is a first-type DDEW or a second-type DDEW, where the first-type DDEW is defined based on an absolute time-domain location and the second-type DDEW is defined based on a relative time-domain location.

In some embodiments, the configuration parameter of the first-type DDEW includes one or more of the following:
a start time-domain unit;
a window length or duration;
an end time-domain unit;
granularity of a time-domain unit; or
a repetition period.

In some embodiments, a configuration parameter of the second-type DDEW includes a window length or duration.

In some embodiments, the apparatus further includes:
a sixth sending unit, used for sending second indication information to a receiving node of the positioning reference signal, where the second indication information is used to indicate different receiving nodes to measure the positioning reference signal sent from the target terminal and the PRU respectively in the same DDEW.

In some embodiments, the apparatus further includes:
a seventh receiving unit, used for receiving positioning measurement quantity information, where the positioning measurement quantity information includes a positioning measurement quantity and DDEW information associated with the positioning measurement quantity; and
a third determining unit, used for determining validity of the positioning measurement quantity based on the positioning measurement quantity information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted that the above-mentioned apparatuses provided in embodiments of the present application may achieve all the method steps implemented in the above-mentioned method embodiments, and may achieve the same technical effects. Therefore, specific descriptions of the same parts and beneficial effects as the method embodiments in this embodiment will not be repeated here.

Embodiments of the present application further provide a computer-readable storage medium, where the computer-readable storage medium stores a computer program for causing a computer to perform the methods for sending a positioning reference signal provided in the above embodiments.

It should be noted that the computer-readable storage medium provided in embodiments of the present application may implement all the method steps implemented in the above method embodiments and achieve the same technical effects. Therefore, specific descriptions of the same parts and beneficial effects as the method embodiments in this embodiment will not be repeated here.

It should be noted that the computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage medium (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

## Claims

1. A method for sending a positioning reference signal, performed by a target terminal or a positioning reference unit (PRU), comprising:
receiving positioning reference signal configuration information, wherein the positioning reference signal configuration information is used to configure the target terminal and the PRU to send the positioning reference signal in a same double differential effective window (DDEW); and
sending the positioning reference signal based on the positioning reference signal configuration information.

2. The method of claim 1, wherein the DDEW is a first-type DDEW or a second-type DDEW, the first-type DDEW is defined based on an absolute time-domain location, and the second-type DDEW is defined based on a relative time-domain location.

3. The method of claim 2, wherein a configuration parameter of the first-type DDEW comprises one or more of the following:
a start time-domain unit;
a window length or duration;
an end time-domain unit;
granularity of a time-domain unit; or
a repetition period.

4. The method of claim 2, wherein a configuration parameter of the second-type DDEW comprises a window length or duration.

5. The method of claim 1, further comprising that:
before receiving the positioning reference signal configuration information, the PRU sends a positioning capability message to a location management function or the target terminal, wherein the positioning capability message carries absolute location information of the PRU; or
before receiving the positioning reference signal configuration information, the PRU sends a PRU location information message to a location management function or the target terminal, wherein the PRU location information message carries absolute location information of the PRU.

6. The method of claim 1, further comprising that:
the target terminal receives positioning measurement quantity information, wherein the positioning measurement quantity information comprises a positioning measurement quantity and DDEW information associated with the positioning measurement quantity; and
the target terminal determines validity of the positioning measurement quantity based on the positioning measurement quantity information.

7. A method for sending a positioning reference signal, performed by a first location management function, comprising:
sending a first positioning information request message to a serving network device of a target terminal and/or a serving network device of a positioning reference unit (PRU), wherein the first positioning information request message carries double differential effective window (DDEW) configuration information.

8. The method of claim 7, wherein the DDEW configuration information is configuration information of a first-type DDEW or configuration information of a second-type DDEW, the first-type DDEW is defined based on an absolute time-domain location, and the second-type DDEW is defined based on a relative time-domain location.

9. The method of claim 8, wherein the configuration information of the first-type DDEW comprises one or more of following parameters:
a start time-domain unit;
a window length or duration;
an end time-domain unit;
granularity of a time-domain unit; or
a repetition period.

10. The method of claim 8, wherein the configuration information of the second-type DDEW comprises a window length or duration.

11. The method of claim 8 or 10, wherein in case that the DDEW configuration information is the configuration information of the second-type DDEW, after sending the configuration information of the second-type DDEW to a first network device, the method further comprises:
receiving positioning reference signal configuration information sent from the first network device; and
sending a second positioning information request message to a second network device, wherein the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

12. The method of any of claims 7 to 10, wherein before sending the first positioning information request message to the serving network device of the target terminal or the serving network device of the PRU, the method further comprises:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

13. The method of any of claims 7 to 10, further comprising:
sending first indication information to a receiving node of the positioning reference signal, wherein the first indication information is used to indicate different receiving nodes to measure the positioning reference signal sent from the target terminal and the PRU respectively in the same DDEW.

14. The method of any of claims 7 to 10, further comprising:
receiving positioning measurement quantity information, wherein the positioning measurement quantity information comprises a positioning measurement quantity and DDEW information associated with the positioning measurement quantity; and
determining validity of the positioning measurement quantity based on the positioning measurement quantity information.

15. The method of claim 14, wherein receiving the positioning measurement quantity information comprises:
receiving the positioning measurement quantity information sent from the serving network device of the PRU, wherein the positioning measurement quantity information also carries absolute location information of the PRU.

16. The method of claim 7, further comprising:
receiving a positioning capability message or a PRU location information message sent from the PRU, wherein the positioning capability message or the PRU location information message carries absolute location information of the PRU.

17. The method of claim 7, wherein before sending the first positioning information request message to the serving network device of the target terminal and/or the serving network device of the PRU, the method further comprises:
obtaining support information for real-time double differential and/or DDEW from the serving network device of the target terminal, and/or obtaining support information for real-time double differential and/or DDEW from the serving network device of the PRU.

18. A method for sending a positioning reference signal, performed by a first network device, comprising:
determining double differential effective window (DDEW) configuration information; and
generating first positioning reference signal configuration information based on the DDEW configuration information, wherein the first positioning reference signal configuration information is used to configure a target terminal and a positioning reference unit (PRU) to send the positioning reference signal in a same DDEW.

19. The method of claim 18, wherein the DDEW configuration information is configuration information of a first-type DDEW or configuration information of a second-type DDEW, the first-type DDEW is defined based on an absolute time-domain location, and the second-type DDEW is defined based on a relative time-domain location.

20. The method of claim 19, wherein the configuration information of the first-type DDEW comprises one or more of following parameters:
a start time-domain unit;
a window length or duration;
an end time-domain unit;
granularity of a time-domain unit; or
a repetition period.

21. The method of claim 19, wherein the configuration information of the second-type DDEW comprises a window length or duration.

22. The method of any of claims 18 to 21, wherein determining the DDEW configuration information comprises:
receiving a positioning information request message sent from a location management function, wherein the positioning information request message carries the DDEW configuration information.

23. The method of claim 19 or 21, wherein in case that the DDEW configuration information is the configuration information of the second-type DDEW, the method further comprises:
sending the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

24. The method of claim 18, further comprising:
sending support information of the first network device for real-time double differential and/or DDEW to a location management function.

25. A target terminal or a positioning reference unit (PRU), comprising a memory, a transceiver, and a processor, wherein
the memory is used for storing a computer program; the transceiver is used for transmitting and receiving data under control of the processor; and the processor is used for reading the computer program in the memory and performing the following operations:
receiving positioning reference signal configuration information, wherein the positioning reference signal configuration information is used to configure the target terminal and the PRU to send the positioning reference signal in a same double differential effective window (DDEW); and
sending the positioning reference signal based on the positioning reference signal configuration information.

26. The target terminal or the PRU of claim 25, wherein the DDEW is a first-type DDEW or a second-type DDEW, the first-type DDEW is defined based on an absolute time-domain location, and the second-type DDEW is defined based on a relative time-domain location.

27. The target terminal or the PRU of claim 26, wherein a configuration parameter of the first-type DDEW comprises one or more of the following:
a start time-domain unit;
a window length or duration;
an end time-domain unit;
granularity of a time-domain unit; or
a repetition period.

28. The target terminal or the PRU of claim 26, wherein a configuration parameter of the second-type DDEW comprises a window length or duration.

29. The target terminal or the PRU of claim 25, wherein the operations further comprise:
before receiving the positioning reference signal configuration information, the PRU sends a positioning capability message to a location management function or the target terminal, wherein the positioning capability message carries absolute location information of the PRU; or
before receiving the positioning reference signal configuration information, the PRU sends a PRU location information message to a location management function or the target terminal, wherein the PRU location information message carries absolute location information of the PRU.

30. The target terminal or the PRU of claim 25, wherein the operations further comprise that:
the target terminal receives positioning measurement quantity information, wherein the positioning measurement quantity information comprises a positioning measurement quantity and DDEW information associated with the positioning measurement quantity; and
the target terminal determines validity of the positioning measurement quantity based on the positioning measurement quantity information.

31. A first location management function, comprising a memory, a transceiver, and a processor, wherein
the memory is used for storing a computer program; the transceiver is used for transmitting and receiving data under control of the processor; and the processor is used for reading the computer program in the memory and performing the following operations:
sending a first positioning information request message to a serving network device of a target terminal and/or a serving network device of a positioning reference unit (PRU), wherein the first positioning information request message carries double differential effective window (DDEW) configuration information.

32. The first location management function of claim 31, wherein the DDEW configuration information is configuration information of a first-type DDEW or configuration information of a second-type DDEW, the first-type DDEW is defined based on an absolute time-domain location, and the second-type DDEW is defined based on a relative time-domain location.

33. The first location management function of claim 32, wherein the configuration information of the first-type DDEW comprises one or more of following parameters:
a start time-domain unit;
a window length or duration;
an end time-domain unit;
granularity of a time-domain unit; or
a repetition period.

34. The first location management function of claim 32, wherein the configuration information of the second-type DDEW comprises a window length or duration.

35. The first location management function of claim 32 or 34, wherein in case that the DDEW configuration information is the configuration information of the second-type DDEW, after sending the configuration information of the second-type DDEW to a first network device, the operations further comprise:
receiving positioning reference signal configuration information sent from the first network device; and
sending a second positioning information request message to a second network device, wherein the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

36. The first location management function of any of claims 31 to 34, wherein before sending the first positioning information request message to the serving network device of the target terminal or the serving network device of the PRU, the operations further comprise:
receiving the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

37. The first location management function of any of claims 31 to 34, wherein the operations further comprise:
sending first indication information to a receiving node of the positioning reference signal, wherein the first indication information is used to indicate different receiving nodes to measure the positioning reference signal sent from the target terminal and the PRU respectively in the same DDEW.

38. The first location management function of any of claims 31 to 34, wherein the operations further comprise:
receiving positioning measurement quantity information, wherein the positioning measurement quantity information comprises a positioning measurement quantity and DDEW information associated with the positioning measurement quantity; and
determining validity of the positioning measurement quantity based on the positioning measurement quantity information.

39. The first location management function of claim 38, wherein receiving the positioning measurement quantity information comprises:
receiving the positioning measurement quantity information sent from the serving network device of the PRU, wherein the positioning measurement quantity information also carries absolute location information of the PRU.

40. The first location management function of claim 31, wherein the operations further comprise:
receiving a positioning capability message or a PRU location information message sent from the PRU, wherein the positioning capability message or the PRU location information message carries absolute location information of the PRU.

41. The first location management function of claim 31, wherein before sending the first positioning information request message to the serving network device of the target terminal and/or the serving network device of the PRU, the operations further comprise:
obtaining support information for real-time double differential and/or DDEW from the serving network device of the target terminal, and/or obtaining support information for real-time double differential and/or DDEW from the serving network device of the PRU.

42. A first network device, comprising a memory, a transceiver, and a processor, wherein
the memory is used for storing a computer program; the transceiver is used for transmitting and receiving data under control of the processor; and the processor is used for reading the computer program in the memory and performing the following operations:
determining double differential effective window (DDEW) configuration information; and
generating first positioning reference signal configuration information based on the DDEW configuration information, wherein the first positioning reference signal configuration information is used to configure a target terminal and a positioning reference unit (PRU) to send the positioning reference signal in a same DDEW.

43. The first network device of claim 42, wherein the DDEW configuration information is configuration information of a first-type DDEW or configuration information of a second-type DDEW, the first-type DDEW is defined based on an absolute time-domain location, and the second-type DDEW is defined based on a relative time-domain location.

44. The first network device of claim 43, wherein the configuration information of the first-type DDEW comprises one or more of following parameter:
a start time-domain unit;
a window length or duration;
an end time-domain unit;
granularity of a time-domain unit; or
a repetition period.

45. The first network device of claim 43, wherein the configuration information of the second-type DDEW comprises a window length or duration.

46. The first network device of any of claims 42 to 45, wherein determining the DDEW configuration information comprises:
receiving a positioning information request message sent from a location management function, wherein the positioning information request message carries the DDEW configuration information.

47. The first network device of claim 43 or 45, wherein in case that the DDEW configuration information is the configuration information of the second-type DDEW, the operations further comprise:
sending the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

48. The first network device of claim 42, wherein the operations further comprise:
sending support information of the first network device for real-time double differential and/or DDEW to a location management function.

49. An apparatus for sending a positioning reference signal, comprising:
a first receiving unit, used for receiving positioning reference signal configuration information, wherein the positioning reference signal configuration information is used to configure a target terminal and a positioning reference unit (PRU) to send the positioning reference signal in a same double differential effective window (DDEW); and
a first sending unit, used for sending the positioning reference signal based on the positioning reference signal configuration information.

50. The apparatus of claim 49, wherein the DDEW is a first-type DDEW or a second-type DDEW, the first-type DDEW is defined based on an absolute time-domain location, and the second-type DDEW is defined based on a relative time-domain location.

51. The apparatus of claim 50, wherein a configuration parameter of the first-type DDEW comprises one or more of the following:
a start time-domain unit;
a window length or duration;
an end time-domain unit;
granularity of a time-domain unit; or
a repetition period.

52. The apparatus of claim 50, wherein a configuration parameter of the second-type DDEW comprises a window length or duration.

53. The apparatus of claim 49, wherein the first sending unit is further used for that:
before receiving the positioning reference signal configuration information, the PRU sends a positioning capability message to a location management function or the target terminal, wherein the positioning capability message carries absolute location information of the PRU; or
before receiving the positioning reference signal configuration information, the PRU sends a PRU location information message to a location management function or the target terminal, wherein the PRU location information message carries absolute location information of the PRU.

54. The apparatus of claim 49, further comprising:
a second receiving unit, used for the target terminal to receive positioning measurement quantity information, wherein the positioning measurement quantity information comprises a positioning measurement quantity and DDEW information associated with the positioning measurement quantity; and
a first determining unit, used for the target terminal to determine validity of the positioning measurement quantity based on the positioning measurement quantity information.

55. An apparatus for sending a positioning reference signal, comprising:
a second sending unit, used for sending a first positioning information request message to a serving network device of a target terminal and/or a serving network device of a positioning reference unit (PRU), wherein the first positioning information request message carries double differential effective window (DDEW) configuration information.

56. The apparatus of claim 55, wherein the DDEW configuration information is configuration information of a first-type DDEW or configuration information of a second-type DDEW, the first-type DDEW is defined based on an absolute time-domain location, and the second-type DDEW is defined based on a relative time-domain location.

57. The apparatus of claim 56, wherein the configuration information of the first-type DDEW comprises one or more of following parameters:
a start time-domain unit;
a window length or duration;
an end time-domain unit;
granularity of a time-domain unit; or
a repetition period.

58. The apparatus of claim 56, wherein the configuration information of the second-type DDEW comprises a window length or duration.

59. The apparatus of claim 56 or 58, further comprising:
a third receiving unit, used for receiving, in case that the DDEW configuration information is the configuration information of the second-type DDEW, positioning reference signal configuration information sent from the first network device, after sending the configuration information of the second-type DDEW to a first network device; and
a third sending unit, used for sending a second positioning information request message to a second network device, wherein the second positioning information request message carries the positioning reference signal configuration information and the configuration information of the second-type DDEW;
the first network device is the serving network device of the target terminal, and the second network device is the serving network device of the PRU; or, the first network device is the serving network device of the PRU, and the second network device is the serving network device of the target terminal.

60. The apparatus of any of claims 55 to 58, further comprising:
a fourth receiving unit, used for receiving, before sending the first positioning information request message to the serving network device of the target terminal or the serving network device of the PRU, the DDEW configuration information sent from a second location management function;
the serving network device of the target terminal is connected to the first location management function, and the serving network device of the PRU is connected to the second location management function; or, the serving network device of the PRU is connected to the first location management function, and the serving network device of the target terminal is connected to the second location management function.

61. The apparatus of any of claims 55 to 58, wherein the second sending unit is further used for:
sending first indication information to a receiving node of the positioning reference signal, wherein the first indication information is used to indicate different receiving nodes to measure the positioning reference signal sent from the target terminal and the PRU respectively in the same DDEW.

62. The apparatus of any of claims 55 to 58, further comprising:
a fifth receiving unit, used for receiving positioning measurement quantity information, wherein the positioning measurement quantity information comprises a positioning measurement quantity and DDEW information associated with the positioning measurement quantity; and
a second determining unit, used for determining validity of the positioning measurement quantity based on the positioning measurement quantity information.

63. The apparatus of claim 62, wherein receiving the positioning measurement quantity information comprises:
receiving the positioning measurement quantity information sent from the serving network device of the PRU, wherein the positioning measurement quantity information also carries absolute location information of the PRU.

64. The apparatus of claim 55, further comprising:
a sixth receiving unit, used for receiving a positioning capability message or a PRU location information message sent from the PRU, wherein the positioning capability message or the PRU location information message carries absolute location information of the PRU.

65. The apparatus of claim 55, further comprising:
an obtaining unit, used for obtaining, before sending the first positioning information request message to the serving network device of the target terminal and/or the serving network device of the PRU, support information for real-time double differential and/or DDEW from the serving network device of the target terminal, and/or support information for real-time double differential and/or DDEW from the serving network device of the PRU.

66. An apparatus for sending a positioning reference signal, comprising:
a determining unit, used for determining double differential effective window (DDEW) configuration information; and
a generating unit, used for generating first positioning reference signal configuration information based on the DDEW configuration information, wherein the first positioning reference signal configuration information is used to configure a target terminal and a positioning reference unit (PRU) to send the positioning reference signal in a same DDEW.

67. The apparatus of claim 66, wherein the DDEW configuration information is configuration information of a first-type DDEW or configuration information of a second-type DDEW, the first-type DDEW is defined based on an absolute time-domain location, and the second-type DDEW is defined based on a relative time-domain location.

68. The apparatus of claim 67, wherein the configuration information of the first-type DDEW comprises one or more of following parameters:
a start time-domain unit;
a window length or duration;
an end time-domain unit;
granularity of a time-domain unit; or
a repetition period.

69. The apparatus of claim 67, wherein the configuration information of the second-type DDEW comprises a window length or duration.

70. The apparatus of any of claims 66 to 69, wherein determining the DDEW configuration information comprises:
receiving a positioning information request message sent from a location management function, wherein the positioning information request message carries the DDEW configuration information.

71. The apparatus of claim 67 or 69, further comprising:
a fourth sending unit, used for sending, in case that the DDEW configuration information is the configuration information of the second-type DDEW, the first positioning reference signal configuration information and the configuration information of the second-type DDEW to the second network device;
the first network device is the serving network device of the target terminal, and the second network device is the serving network device of the PRU; or, the first network device is the serving network device of the PRU, and the second network device is the serving network device of the target terminal.

72. The apparatus of claim 66, further comprising:
a fifth sending unit, used for sending support information of the first network device for real-time double differential and/or DDEW to a location management function.

73. A computer-readable storage medium, wherein the computer-readable storage medium stores a computer program, and the computer program is used to cause a computer to perform the method of any of claims 1 to 6.

74. A computer-readable storage medium, wherein the computer-readable storage medium stores a computer program, and the computer program is used to cause a computer to perform the method of any of claims 7 to 17.

75. A computer-readable storage medium, wherein the computer-readable storage medium stores a computer program, and the computer program is used to cause a computer to perform the method of any of claims 18 to 24.
